(19) Europäisches Patentamt
European Patent Office
Office européen des brevets

(11) **EP 3 195 256 B1**

(12) **EUROPÄISCHE PATENTSCHRIFT**

(45) Veröffentlichungstag und Bekanntmachung des Hinweises auf die Patenterteilung:
**10.06.2020   Patentblatt 2020/24**

(21) Anmeldenummer: **15750985.2**

(22) Anmeldetag: **10.08.2015**

(51) Int Cl.:
*G06T 7/521* (2017.01)     *G06T 7/593* (2017.01)
*G06T 7/80* (2017.01)

(86) Internationale Anmeldenummer:
**PCT/EP2015/068377**

(87) Internationale Veröffentlichungsnummer:
**WO 2016/041695 (24.03.2016 Gazette 2016/12)**

(54) **VERFAHREN UND VORRICHTUNG ZUM IDENTIFIZIEREN VON STRUKTURELEMENTEN EINES PROJIZIERTEN STRUKTURMUSTERS IN KAMERABILDERN**

METHOD AND APPARATUS FOR IDENTIFYING STRUCTURAL ELEMENTS OF A PROJECTED STRUCTURAL PATTERN IN CAMERA IMAGES

PROCÉDÉ ET DISPOSITIF POUR IDENTIFIER DANS DES IMAGES DE CAMÉRA DES ÉLÉMENTS STRUCTURELS D'UN MOTIF STRUCTUREL PROJETÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2014   DE 102014113389**

(43) Veröffentlichungstag der Anmeldung:
**26.07.2017   Patentblatt 2017/30**

(73) Patentinhaber: **Pilz GmbH & Co. KG**
**73760 Ostfildern (DE)**

(72) Erfinder: **WENDLER, Martin**
**73760 Ostfildern (DE)**

(74) Vertreter: **Witte, Weller & Partner Patentanwälte mbB**
**Postfach 10 54 62**
**70047 Stuttgart (DE)**

(56) Entgegenhaltungen:
EP-A1- 2 133 619          EP-A1- 2 568 253
EP-A2- 1 649 423          WO-A1-2013/145665
DE-B3-102007 036 129     US-B1- 6 466 305

- **SINLAPEECHEEWA C ET AL: "3D profile measurement by color pattern projection and system calibration", INDUSTRIAL TECHNOLOGY, 2002. IEEE ICIT '02. 2002 IEEE INTERNATIONAL CONFERENCE ON DEC. 11-14, 2002, PISCATAWAY, NJ, USA,IEEE, PISCATAWAY, NJ, USA, Bd. 1, 11. Dezember 2002 (2002-12-11), Seiten 405-410, XP010637340, DOI: 10.1109/ICIT.2002.1189930 ISBN: 978-0-7803-7657-1**
- **YANG ET AL: "Flexible and accurate implementation of a binocular structured light system", OPTICS AND LASERS IN ENGINEERING, ELSEVIER, AMSTERDAM, NL, Bd. 46, Nr. 5, 8. Februar 2008 (2008-02-08), Seiten 373-379, XP022500737, ISSN: 0143-8166, DOI: 10.1016/J.OPTLASENG.2007.12.008**
- **SALVI J ET AL: "Pattern codification strategies in structured light systems", PATTERN RECOGNITION, ELSEVIER, GB, Bd. 37, Nr. 4, 1. April 2004 (2004-04-01), Seiten 827-849, XP004491495, ISSN: 0031-3203, DOI: 10.1016/J.PATCOG.2003.10.002**

EP 3 195 256 B1

**Beschreibung**

Die Erfindung betrifft ein Verfahren zum Identifizieren von Strukturelementen eines auf eine Szene projizierten Strukturmusters in Kamerabildern.

Die Erfindung betrifft des Weiteren eine Vorrichtung zum Identifizieren von Strukturelementen eines auf eine Szene projizierten Strukturmusters in Kamerabildern, insbesondere zur Durchführung des vorstehend genannten Verfahrens.

Die Erfindung betrifft außerdem eine Verwendung eines vorstehend genannten Verfahrens und/oder einer vorstehend genannten Vorrichtung zum Überwachen, insbesondere Absichern eines Gefahrenbereichs, insbesondere eines Gefahrenbereichs einer Maschine, wie etwa einer Presse oder eines Roboters.

Unter einer Szene im Sinne der vorliegenden Erfindung ist insbesondere ein dreidimensionaler Gefahrenbereich zu verstehen, der von den Kameras überwacht wird. In der Szene können bewegliche Objekte, bspw. Personen vorhanden sein. Insbesondere im letzteren Fall überwachen Kameras die Szene darauf, ob sich eine Person oder ein Körperteil derselben in gefährlicher Nähe zu einer automatisiert arbeitenden Maschine befindet oder dorthin begibt.

Zur Überwachung von Gefahrenbereichen, insbesondere Gefahrenbereichen von Maschinen und industriellen Anlagen ist es bekannt, Kameras einzusetzen, wie in EP 2 133 619 A1 beschrieben ist. Dort wird eine 3D-Sicherheitskamera offenbart, die einen ersten und einen zweiten Bildsensor aufweist, die jeweils Bilddaten des Raumbereichs erzeugen können. Die 3D-Sicherheitskamera arbeitet mit einem Projektor zusammen, der in der Szene, d.h. in dem Raumbereich ein strukturiertes Beleuchtungsmuster erzeugt. Eine Auswertungseinheit erzeugt aus den Bilddaten nach dem Stereoskopieprinzip eine Tiefenkarte des Raumbereichs, die auf unzulässige Eingriffe in den Raumbereich überwacht wird.

Bei der stereoskopischen Auswertung von Bildpaaren einer Stereokamera können Messfehler durch im überwachten Raumbereich befindliche kontrastarme Objekte oder sich wiederholende Strukturen auftreten. Aus diesem Grund wird, wie in dem vorstehend genannten Dokument beschrieben, ein Strukturmuster in den Sichtbereich der Kameras projiziert, um den Kontrast in den Kamerabildern zu verbessern. Vorteilhaft ist dabei die Verwendung von Strukturmustern in Form von periodischen Punktmustern, wie sie ebenfalls bereits in dem vorstehend genannten Dokument offenbart sind. Strukturmuster in Form von Punktmustern haben gegenüber komplexeren Strukturmustern den Vorteil, dass sie scharf begrenzt sind und dass weniger Beleuchtungsenergie nötig ist, um sie zu projizieren.

Ein projiziertes Strukturmuster im Sinne der vorliegenden Erfindung ist ein optisches Strukturmuster, mit anderen Worten ein Muster, das aus Lichtflecken besteht.

Problematisch bei der Verwendung von Punktmustern, insbesondere homogenen Punktmustern als Strukturmustern ist jedoch, dass es häufig zu Fehlzuordnungen von Punkten in den Kamerabildern zu den in den in die Szene projizierten Punkten kommt. Allgemein hängt nämlich die Lage ein und desselben projizierten Strukturelements in den Bildern der Kameras von dem aktuellen Abstand des projizierten Strukturelements zu den Kameras und ebenso von der Geometrie des Objektes, auf das das Strukturelement projiziert wird, ab. Mit anderen Worten kann die Lage eines Strukturelements in den Kamerabildern sich in Abhängigkeit des Abstandes und der Objektgeometrie verändern, und in der Regel in den Kameras unterschiedlich sein.

Eine Fehlzuordnung von Punkten in den Kamerabildern zu den auf die Szene projizierten Punkten führt zu einer fehlerhaften Bestimmung des Abstandes zu einem in der Szene befindlichen Objekt. Eine fehlerhafte Abstandsmessung hat wiederum zur Folge, dass gefährliche Situationen entstehen können, wenn beispielsweise ein Objekt, das sich im Gefahrenbereich befindet, von den Kameras als außerhalb des Gefahrenbereichs befindlich beurteilt wird, oder zu einer unzureichenden Verfügbarkeit, beispielsweise einer Maschine im Gefahrenbereich, wenn sich ein Objekt außerhalb des Gefahrenbereichs befindet, dieses von den Kameras jedoch aufgrund fehlerhafter Abstandsmessung als im Gefahrenbereich befindlich beurteilt wird, und die Maschine deshalb abgeschaltet wird.

Eine Lösung des Problems der fehlerhaften Zuordnung von Strukturelementen in den Kamerabildern zu den auf die Szene projizierten Strukturelementen besteht gemäß EP 2 019 281 A1 darin, komplexere Strukturmuster auf die Szene zu projizieren, die zumindest in Teilbereichen inhomogen, aperiodisch und selbstunähnlich sind. Die Erzeugung solcher komplexer Strukturmuster ist jedoch hinsichtlich des hohen apparativen Aufwandes, d. h. der Komplexität des Projektors, nachteilig.

WO 2013/145665 A1 offenbart eine Vorrichtung zur dreidimensionalen Vermessung, die Lichtlinien von einem Projektor auf ein Werkstück projiziert, wobei eine Stereokamera ein Bild des Werkstückes auffängt, auf das die Lichtlinien projiziert sind. Eine Steuervorrichtung der Vorrichtung identifiziert zeitweise eine Korrespondenz zwischen einer hellen Linie in einem ersten Bild des aufgefangenen Stereobildes und einer Lichtschnittebene und projiziert die helle Linie auf die Lichtschnittebene. Die auf die Lichtschnittebene projizierte helle Linie wird auf ein zweites Bild projiziert. Die Steuervorrichtung berechnet den Grad der Ähnlichkeit zwischen einer hellen Linie, die auf das zweite Bild projiziert wird, und einer hellen Linie in dem zweiten Bild und bestimmt das Ergebnis der identifizierten Korrespondenzbeziehung zwischen der projizierten hellen Linie und der hellen Linie in dem zweiten Bild.

US 2008/0201101 A1 offenbart einen handhaltbaren dreidimensionalen Scanner zum Scannen und Digitalisieren der Oberflächengeometrie von Gegenständen.

DE 20 2008 017 729 U1 offenbart eine 3D-Sicherheitskamera zur Überwachung und Absicherung eines Raumbereichs. Die Sicherheitskamera weist eine Beleuchtungseinheit mit mindestens einer Halbleiterlichtquelle auf. Die Halbleiterlichtquelle erzeugt eine hohe optische Leistung von mindestens 10 Watt, die die Erzeugung einer dichten Tiefenkarte für eine sichere Auswertung unabhängig von Schwankungen des Umgebungslichts in dem überwachten Raumbereich ermöglicht.

DE 102004020419 B3 offenbart eine Vorrichtung zur Vermessung auch stark gekrümmter spiegelnder Oberflächen. Dabei werden Muster, die an der Oberfläche gespiegelt werden, beobachtet und ausgewertet. Die gespiegelten Muster werden aus mehreren Richtungen beobachtet. Die Auswertung erfolgt durch Bestimmung derjenigen Orte im Messraum, an denen für die verschiedenen Beobachtungsrichtungen bestimmte Oberflächennormalen die geringsten Abweichungen gegeneinander haben.

US 6 466 305 B offenbart ein Verfahren gemäß dem Oberbegriff von Anspruch 1 und eine Vorrichtung gemäß dem Oberbegriff von Anspruch 8. Die Vorrichtung weist zwei Kameras und mehrere Laserlichtquellen auf. Die beiden Kameras haben sich überschneidende Gesichtsfelder. Zur Behebung der Zweideutigkeit einzelner Laserspots in den Kamerabildern wird vorgeschlagen, die eine Kamera zur Triangulation und die andere zur Bestätigung der Messung zu benutzen. Zur Kalibrierung des Systems wird für jede Laserspot-Kamera-Kombination eine Nachschlage- oder Kalibriertabelle erzeugt. In der KalibrierTabelle können für jedes Kamera-Pixel und für jede Laserlichtquelle Laserspot-Abstandswerte abgespeichert sein, oder die Nachschlagetabelle kann so beschaffen sein, dass sie für jede Laserlichtquelle die Entsprechung zwischen den Pixeln der einen Kamera und der anderen Kamera enthält.

EP 2 568 253 A1 offenbart ein Messverfahren unter Verwendung strukturierten Lichtes, bei dem eine Sequenznummer und eine Tiefe geringer Genauigkeit eines Laserlichtspots basierend auf einer Bildposition des Laserlichtspots in einer ersten Kamera gemäß einer ersten Zuordnungsbeziehung in einer Abgrenzungsdatenbank erhalten wird, nach Bildpositionen des Laserlichtspots in einer zweiten Kamera gemäß der Sequenznummer und der Tiefe geringer Genauigkeit des Laserlichtspots gesucht wird, und ein Abgleich gemäß der Bildposition des Laserlichtspots in der ersten Kamera und den jeweiligen Kandidaten von Abgleichpunkten innerhalb der zweiten Kamera durchgeführt wird, um ein Abgleichergebnis zu erhalten. Ein Berechnungsprozess umfasst das Erhalten einer Bildposition in der zweiten Kamera, die mit der Bildposition in der ersten Kamera gemäß dem Abgleichergebnis abgeglichen ist, und ein Bestimmen einer genauen Position des Laserlichtspots gemäß einer zweiten Zuordnungsbeziehung in der Abgrenzungsdatenbank.

Der Erfindung liegt die Aufgabe zugrunde, ein Verfahren und eine Vorrichtung anzugeben, mit denen Strukturelemente eines auf eine Szene projizierten Strukturmusters in Kamerabildern sicher identifiziert werden können, ohne dass hierzu komplexe, inhomogene, aperiodische, zeitlich oder örtlich codierte Strukturmuster erforderlich sind.

Zur Lösung dieser Aufgabe wird ein Verfahren gemäß Patentanspruch 1 zum sicheren Identifizieren von Strukturelementen eines auf eine Szene projizierten Strukturmusters in Kamerabildern bereitgestellt.

Des Weiteren wird erfindungsgemäß eine Vorrichtung gemäß Patentanspruch 8 zum sicheren Identifizieren von Strukturelementen eines auf eine Szene projizierten Strukturmusters in Kamerabildern, insbesondere zur Durchführung des vorstehend genannten Verfahrens, bereitgestellt.

Der Begriff "Kamera" ist im Rahmen der vorliegenden Erfindung allgemein zu verstehen. Unter einer Kamera kann beispielsweise lediglich ein Bildsensor mit zugehöriger Optik zu verstehen sein. Unter erster Kamera und zumindest zweiter Kamera ist auch zu verstehen, dass zwei Bildsensoren im seitlichen Abstand zueinander in einem gemeinsamen Gehäuse untergebracht sind, wobei den Bildsensoren eine gemeinsame oder jeweils separate Abbildungsoptik zugeordnet sein kann. Die erste Kamera und die zumindest eine zweite Kamera können jedoch auch als separate eigenständige Kameras mit eigenem Gehäuse und eigener Abbildungsoptik ausgebildet sein.

Das erfindungsgemäße Verfahren und die erfindungsgemäße Vorrichtung beruhen auf dem Prinzip der genauen Kenntnis der Lage und Orientierung des Projektors, beispielsweise dessen Austrittspupille und der Senderichtung für jedes einzelne Strukturelement, und der Lage und Orientierung der zumindest zwei Kameras, beispielsweise Lage und Orientierung ihrer Eintrittspupillen und ihrer Blickrichtung. Um diese genaue Kenntnis zu erlangen, werden bei dem erfindungsgemäßen Verfahren, beispielsweise bei der Einrichtung der zumindest zwei Kameras und des Projektors, Kalibrierbilder des Strukturmusters aufgenommen, aus denen Kalibrierdaten gewonnen werden. Die Kalibrierdaten weisen für die einzelnen Strukturelemente jeweils Kombinationen aus ersten Parametern, die das jeweilige Strukturelement mit der Lage und Orientierung der ersten Kamera und des Projektors korrelieren, und aus zumindest zweiten Parametern auf, die das jeweilige Strukturelement mit der Lage und Orientierung der zumindest einen zweiten Kamera und des Projektors korrelieren. Durch diese Parameterkombinationen, die bei der Kalibrierung den einzelnen, vorzugsweise jedem Strukturelement zugeordnet werden, sind die Strukturelemente des projizierten Strukturmusters eindeutig bestimmt.

In der erfindungsgemäßen Vorrichtung werden diese gewonnenen Kalibrierdaten in einer Speichereinheit abgelegt. Bei dem erfindungsgemäßen Verfahren werden die Kalibrierdaten dann bei der Identifizierung der auf die Szene projizierten Strukturelemente des Strukturmusters in den Kamerabildern der zumindest zwei Kameras herangezogen, um eine wechselseitig eindeutige Zuordnung zwischen Strukturelementen im Kamerabild der zumindest einen zweiten Kamera und Strukturelementen im Kamerabild der ersten Kamera zu ermöglichen.

Das erfindungsgemäße Verfahren und die erfindungsgemäße Vorrichtung ermöglichen eine sichere Zuordnung von Strukturelementen in den Kamerabildern der ersten und zumindest einen zweiten Kamera zu den auf die Szene projizierten Strukturelementen. Mit dem erfindungsgemäßen Verfahren und der erfindungsgemäßen Vorrichtung wird die Grundlage für eine korrekte Messung von Abständen zu Objekten in einem zu überwachenden Raumbereich geschaffen. Damit lässt sich vom Kamerasystem zuverlässig beurteilen, ob sich ein Objekt beispielsweise in einem Gefahrenbereich befindet oder außerhalb.

Aus der Kalibrierung der zumindest zwei Kameras und des Projektors durch Aufnahme von Kalibrierbildern ist deren Lage und Orientierung zueinander bekannt, und aus der bekannten Lage und Orientierung der beiden Kameras zueinander sind Geraden, sogenannte Kamera-Epipolaren der zumindest zwei Kameras bestimmbar. Durch die Kalibrierung ist auch die Lage und Orientierung des Projektors zu den zumindest zwei Kameras bekannt, wobei aus dieser Kenntnis weitere Geraden, sogenannte Beleuchtungs-Epipolaren der Paarungen aus der ersten Kamera und dem Projektor und aus der zumindest einen zweiten Kamera und dem Projektor bestimmbar sind.

In den zumindest zwei Kameras liegt das Bild eines Strukturelementes immer auf einer jeweiligen Kamera-Epipolaren. Auf welcher Kamera-Epipolaren das Bild eines Strukturelementes zu liegen kommt und welche anderen Strukturelemente noch auf dieser Kamera-Epipolaren liegen, hängt von der Geometrie und dem Abstand des Objektes ab, auf das das Strukturmuster projiziert wird. Zu jeder der zumindest zwei Kameras gibt es viele Kamera-Epipolaren.

Zusätzlich befindet sich jedes projizierte Strukturelement sowie dessen Bild in den Kameras auf einer jeweiligen Beleuchtungs-Epipolaren. Zu jeder Paarung aus erster Kamera und dem Projektor und zumindest zweiter Kamera und Projektor gibt es mehrere Beleuchtungs-Epipolaren. Bei zwei Kameras und einem Projektor, der zu den Kameras wie oben angegeben außerhalb deren Verbindungsgerade positioniert ist, gibt es zwei schräg zueinander verlaufende Scharen von Beleuchtungs-Epipolaren, wobei eine erste Schar der Anordnung aus erster Kamera und Projektor und eine zweite Schar der Anordnung aus zweiter Kamera und Projektor zugeordnet ist. Ein projiziertes Strukturelement sowie dessen Bild in den Kameras liegen immer auf einer jeweiligen selben Beleuchtungs-Epipolaren, unabhängig von der Geometrie und dem Abstand eines Objektes, auf das das Strukturmuster projiziert wird. An welcher Stelle auf einer Beleuchtungs-Epipolaren das Strukturelement zu liegen kommt und welche anderen Strukturelemente noch auf dieser Linie liegen, hängt dagegen von der Geometrie und dem Abstand des Objektes ab.

In Ausnutzung oben genannten Umstandes, dass ein Strukturelement und dessen Bild immer auf derselben Beleuchtungs-Epipolaren liegt, unabhängig von der Geometrie und dem Abstand eines Objektes, auf das das Strukturmuster projiziert wird, umfassen die ersten Parameter für die einzelnen Strukturelemente Steigungen und Schnittpunkte mit einer ersten Bezugsachse von zur ersten Kamera gehörigen ersten Beleuchtungs-Epipolaren und die zumindest zweiten Parameter für die einzelnen Strukturelemente Steigungen und Schnittpunkte mit einer zweiten Bezugsachse von zur zumindest einen zweiten Kamera gehörigen Beleuchtungs-Epipolaren umfassen.

Bei der erfindungsgemäßen Vorrichtung sind die vorstehenden Kalibrierdaten in der Speichereinheit, beispielsweise in Form einer Kalibrierliste, abgelegt.

Die Nutzung dieser Parameter als Kalibrierdaten hat einerseits den Vorteil einer eindeutigen und individuellen Zuordenbarkeit zwischen den projizierten Strukturelementen und diesen Parametern, und zum anderen kann mit dieser Art der Parameter die Zuordnung der Bilder zu den projizierten Strukturelementen auf einfache Weise erfolgen, wie noch näher beschrieben werden wird.

Bei der Kalibrierung der zumindest zwei Kameras und des Projektors wird somit für jedes Strukturelement in jeder Kamera ermittelt, auf welcher Beleuchtungs-Epipolaren es sich im Bezug auf die erste Kamera und auf welcher Beleuchtungs-Epipolaren es sich im Bezug auf die zumindest eine zweite Kamera befindet. Da eine Gerade mathematisch durch ihre Steigung und einen Punkt eindeutig bestimmt ist, reicht es aus, wie hier vorgesehen, zu dem jeweiligen Strukturelement nur die Steigung und nur den Schnittpunkt der Beleuchtungs-Epipolaren mit einer Bezugsachse abzulegen, was den Speicheraufwand deutlich reduziert.

Bei einer höheren Strukturelementdichte des Strukturmusters befinden sich typischerweise mehrere Strukturelemente auf der gleichen Beleuchtungs-Epipolaren in Bezug auf jeweils eine der zumindest zwei Kameras. Nichtsdestoweniger ist jedes Strukturelement durch die individuelle Kombination der zumindest zwei Beleuchtungs-Epipolaren, d. h. der Beleuchtungs-Epipolaren, die zur ersten Kamera gehört, und der Beleuchtungs-Epipolaren, die zur zumindest zweiten Kamera gehört, eindeutig beschrieben.

Die im Zusammenhang mit der vorstehenden Ausgestaltung genannte erste Bezugsachse, mit dem sich die zur ersten Kamera gehörigen ersten Beleuchtungs-Epipolaren schneiden, ist vorzugsweise eine Bildzeile der ersten Kamera und die zweite Bezugsachse, mit der sich die zur zumindest einen zweiten Kamera gehörigen zweiten Beleuchtungs-Epipolaren schneiden, ist vorzugsweise eine Bildzeile der zumindest einen zweiten Kamera.

Beispielsweise können die genannten Bildzeilen die jeweils erste Bildzeile der jeweiligen Kamera sein.

In einer weiteren bevorzugten Ausgestaltung des Verfahrens wird zur Aufnahme der Kalibrierbilder das Strukturmuster nacheinander auf eine erste Fläche und eine zweite Fläche projiziert, wobei die erste und die zweite Fläche in Senderichtung des Projektor voneinander beabstandet sind.

Diese Art der Aufnahme der Kalibrierbilder und damit der Kalibrierung der zumindest zwei Kameras und des Projektors ist besonders einfach durchführbar und ergibt somit auf einfache Weise zu jedem Strukturelement des Strukturmusters die Beleuchtungs-Epipolare in Bezug auf die erste Kamera und die Beleuchtungs-Epipolare in Bezug auf die zumindest eine zweite Kamera.

Vorzugsweise sind die erste Fläche und die zweite Fläche ebene Flächen. Besonders einfach wird die Kalibrierung, wenn als erste Fläche und zweite Fläche dieselbe Fläche verwendet wird, die zunächst in einem ersten Abstand zu den Kameras und dem Projektor positioniert wird, um ein erstes Kalibrierbild aufzunehmen, und anschließend in einem zweiten Abstand von den Kameras und dem Projektor positioniert wird, um ein zweites Kalibrierbild aufzunehmen. Die beiden Kalibrierbilder werden abgespeichert und zur Gewinnung der Kalibrierdaten ausgewertet.

Besonders einfach lässt sich das erfindungsgemäße Verfahren realisieren, wenn gemäß einer bevorzugten Ausführung der Vorrichtung die Eintrittspupille der ersten Kamera, die Eintrittspupille der zumindest einen zweiten Kamera und die Austrittspupille des Projektors in einer Ebene liegen.

In dieser Ausgestaltung vereinfachen sich die geometrischen Verhältnisse sowohl bei der Kalibrierung als auch bei der Identifizierung von Bildern von Strukturelementen. Die Abstände der Strukturelemente untereinander in den Bildern der Kameras sind bei dieser Anordnung unabhängig vom Abstand der projizierten Strukturelemente zu den Kameras nämlich stets gleich. Damit ist eine Zuordnung der Strukturelemente in den Kalibrierbildern einfach möglich. Eine Gerade durch die beiden Positionen eines Strukturelementes in den zumindest zwei Kalibrierbildern entspricht genau der Beleuchtungs-Epipolaren für dieses Strukturelement. Des Weiteren sind sämtliche erste Beleuchtungs-Epipolaren zueinander parallel, haben also die gleiche Steigung und unterscheiden sich lediglich durch ihre Schnittpunkte mit der ersten Bezugsachse, und sämtliche zweite Beleuchtungs-Epipolaren sind parallel zueinander, haben also auch die gleiche Steigung und unterscheiden sich lediglich durch ihre Schnittpunkte mit der zweiten Bezugsachse. Der Umfang an Kalibrierdaten und damit erforderliche Speicherkapazität und Rechenleistung ist hierdurch vorteilhaft weiter reduziert.

Weiter zur Vereinfachung des erfindungsgemäßen Verfahrens trägt es bei, wenn eine optische Achse der ersten Kamera, eine optische Achse der zumindest einer zweiten Kamera und eine optische Achse des Projektors parallel zueinander sind.

Bei dieser Ausgestaltung sind die Kamera-Epipolaren der zumindest zwei Kameras parallel zueinander und zur Verbindungsgeraden der Kameras. Sie können sogar von Kamera zu Kamera miteinander fluchten. Die Bildzeilen der zumindest zwei Kameras können weiter vorteilhaft parallel oder senkrecht zu den Kamera-Epipolaren gelegt werden, und die Verzeichnung der Kameraobjektive oder des gemeinsamen Kameraobjektivs kann leicht korrigiert werden.

Im Zusammenhang mit der zuvor beschriebenen Ausgestaltung des Verfahrens, wonach zur Aufnahme der Kalibrierbilder das Strukturmuster nacheinander auf eine erste Fläche und eine zweite Fläche projiziert wird, die in Senderichtung des Projektors voneinander beabstandet sind, ist es bevorzugt, wenn die Flächen eben und senkrecht zu den optischen Achsen der Kameras und des Projektors orientiert sind.

Durch die senkrechte Orientierung der Flächen ist das von den zumindest zwei Kameras aufgefangene Strukturmuster im Wesentlichen unverzeichnet.

Die vorstehend genannten Ausgestaltungen vereinfachen nicht nur die Kalibrierung, sondern auch das sichere Identifizieren der auf die Szene projizierten Strukturelemente des Strukturmusters in den Kamerabildern der zumindest zwei Kameras.

Bei der Vorrichtung ist ein Abstand zwischen der ersten und zumindest einen zweiten Kamera von einem Abstand zwischen dem Projektor und der ersten Kamera und von einem Abstand zwischen dem Projektor und der zumindest einen zweiten Kamera vorzugsweise verschieden.

Hierdurch wird die Strukturelementidentifizierung in den Kamerabildern weiter verbessert. Jede Brechung von Symmetrien in der Anordnung der zumindest zwei Kameras und des Projektors erhöht die Genauigkeit der Zuordnung der Strukturelemente in den Kamerabildern zu den projizierten Strukturelementen.

In einer weiteren bevorzugten Ausgestaltung des Verfahrens werden Pixelkoordinaten des im Kamerabild der ersten Kamera jeweiligen zu identifizierenden Strukturelements bestimmt, aus den Pixelkoordinaten und den Kalibrierdaten wird zumindest ein erster Parameter berechnet, aus den Kalibrierdaten werden alle Strukturelemente ausgelesen, die, gegebenenfalls innerhalb eines Toleranzbandes, ebenfalls dem zumindest einen ersten Parameter genügen, weiterhin wird für jedes dieser ausgelesenen Strukturelemente zumindest einer der zumindest zweiten Parameter ausgelesen, und im Kamerabild der zumindest einen zweiten Kamera wird dasjenige Strukturelement ermittelt, das sich dem zu identifizierenden Strukturelement im Kamerabild der ersten Kamera wechselseitig eindeutig zuordnen lässt.

Bei der erfindungsgemäßen Vorrichtung ist die Recheneinheit entsprechend zur Durchführung der vorstehend genannten Schritte eingerichtet.

Der Rechenaufwand für die vorstehend genannten Schritte in dieser Ausgestaltung des Verfahrens ist vorteilhaft gering, da im Wesentlichen auf abgelegte bzw. abgespeicherte Kalibrierdaten zurückgegriffen werden kann. Für ein zu identifizierendes Strukturelement wird lediglich die erste Beleuchtungs-Epipolare berechnet, auf der sich das zu identifizierende Strukturelement befindet. Im Weiteren wird auf die abgelegten Kalibrierdaten zugegriffen, um die wechselseitig eindeutige Zuordnung zwischen Strukturelementen im Bild der zumindest einen zweiten Kamera zu dem zu identifizierenden Strukturelement im Bild der ersten Kamera durchzuführen.

Dazu wird aus den Strukturelementen im Bild der zumindest einen zweiten Kamera, die auf den zweiten Beleuchtungs-Epipolaren liegen, dasjenige ausgewählt, das auch auf der richtigen Kamera-Epipolaren, also dem Schnittpunkt zwischen zweiter Beleuchtungs-Epipolare und dieser Kamera-Epipolare, liegt. Dies ist insbesondere dann besonders einfach, wenn die Kamera-Epipolaren der beiden Kameras parallel zueinander sind und auf gleicher Höhe liegen.

In einer weiteren bevorzugten Ausgestaltung des Verfahrens wird das auf die Szene projizierte Strukturmuster zusätzlich mittels einer dritten Kamera aufgefangen, die außerhalb der Verbindungsgeraden der ersten und zweiten Kamera und außerhalb der Verbindungsgeraden der ersten Kamera und dem Projektor und außerhalb der Verbindungsgeraden der zweiten Kamera und dem Projektor positioniert ist, wobei die Kalibrierdaten zusätzlich dritte Parameter aufweisen, die das jeweilige Strukturelement mit der Lage und Orientierung der dritten Kamera und des Projektors korrelieren.

Die erfindungsgemäße Vorrichtung weist entsprechend eine dritte Kamera zum Auffangen des auf die Szene projizierten Strukturmusters auf.

Je nach Komplexität der Topologie der Szene, auf die das Strukturmuster projiziert wird, kann es vorkommen, dass ein bestimmtes Strukturelement in einer der zumindest zwei Kameras nicht sichtbar ist, beispielsweise durch Verdeckung durch eine Kante oder einen Absatz. In diesem Fall kann dieses Strukturelement dann mit der dritten Kamera in Verbindung mit einer der beiden anderen Kameras zuverlässig identifiziert werden. Die dritte Kamera ist auch dann hinsichtlich der sicheren Identifizierung von Strukturelementen hilfreich, wenn beispielsweise eine der drei Kameras streifend auf eine Fläche in der Szene blickt.

In einer weiteren bevorzugten Ausgestaltung des Verfahrens sind die Strukturelemente in zwei, vorzugsweise zueinander senkrechten, Hauptachsen gleichmäßig über das Strukturmuster verteilt, wobei weiter vorzugsweise die zwei Hauptachsen des Strukturmusters schräg zur Verbindungsgeraden der ersten und zumindest einen zweiten Kamera und/oder schräg zu den Verbindungsgeraden des Projektors und der ersten und der zumindest einen zweiten Kamera verlaufen.

Ein gleichmäßiges Strukturmuster hat den Vorteil, dass der Projektor konstruktiv einfach ausgebildet sein kann. Die schräge Anordnung der Hauptachsen des Strukturmusters zur Verbindungsgeraden der zumindest zwei Kameras und/oder zur Verbindungsgeraden des Projektors und der ersten und der zumindest einer zweiten Kamera bewirkt einen Symmetriebruch, der für die sichere Identifizierung der Strukturelemente in den Kamerabildern von Vorteil ist, weil Mehrdeutigkeiten bei der Identifizierung reduziert werden.

Das erfindungsgemäße Verfahren eignet sich insbesondere für eine Ausgestaltung, bei der das Strukturmuster ein Punktmuster, insbesondere ein homogenes Punktmuster, ist und die Strukturelemente Punkte sind.

Bei der Vorrichtung ist der Projektor entsprechend dazu eingerichtet, das Strukturmuster in Form eines insbesondere homogenen Punktmusters zu erzeugen.

Die Verwendung insbesondere homogener bzw. periodischer Punktmuster bzw. -gitter hat den Vorteil, dass solche Strukturmuster einfach erzeugt und mit hoher Intensität projiziert werden können.

In einer weiteren bevorzugten Ausgestaltung des Verfahrens wird das Strukturmuster gepulst mit einer Pulsfrequenz gesendet, die einer halben Bildaufnahmefrequenz der ersten und der zumindest einen zweiten Kamera entspricht, und wobei jeweils zwei aufeinander folgende von der ersten und zumindest einen zweiten Kamera aufgefangene Bilder voneinander subtrahiert werden.

Bei der Vorrichtung ist der Projektor entsprechend dazu eingerichtet, das Strukturmuster gepulst mit einer Pulsfrequenz zu senden, die einer halben Bildfrequenz der ersten und der zumindest einer zweiten Kamera entspricht, und wobei die Recheneinheit dazu eingerichtet ist, jeweils zwei von der ersten und zumindest einen zweiten Kamera nacheinander aufgefangene Bilder voneinander zu subtrahieren.

In dieser Ausgestaltung verbleiben durch die Subtraktion zweier aufeinander folgender Bilder, die von der ersten Kamera und die von der zumindest einen zweiten Kamera aufgenommen werden, nur die Strukturelemente in den Differenz-Kamerabildern. Auf diese Weise können die Strukturelemente in den Kamerabildern besser erkannt werden.

Zur noch weiteren Kontrasterhöhung kann sämtliches Umgebungslicht außer der Wellenlänge des Projektionslichtes mit einem Bandpassfilter, beispielsweise IR-Bandpassfilter, abgeblockt werden. Das Bandpassfilter kann in der oder den Optiken der zumindest zwei Kameras angeordnet sein.

Das erfindungsgemäße Verfahren und/oder die erfindungsgemäße Vorrichtung nach einer oder mehreren der vorstehend genannten Ausgestaltungen wird vorzugsweise zum Überwachen, insbesondere Absichern eines Gefahrenbereichs, insbesondere eines Gefahrenbereichs einer Maschine verwendet.

Weitere Vorteile und Merkmale ergeben sich aus den nachfolgenden Beschreibung und der beigefügten Zeichnung.

Ein Ausführungsbeispiel der Erfindung ist in der Zeichnung dargestellt und wird mit Bezug auf diese hiernach näher beschrieben. Es zeigen:

Figur 1     eine Vorrichtung zum Identifizieren von Strukturelementen eines auf eine Szene projizierten Strukturmusters in Kamerabildern;

Figur 2     einen Ausschnitt der Szene mit einem darin befindlichen Objekt;

Figur 3     ein erstes Kalibrierbild, das im Rahmen einer Kalibrierung der Vorrichtung in Fig. 1 aufgenommen wurde;

Figur 4     ein zweites Kalibrierbild, das im Rahmen der Kalibrierung der Vorrichtung in Fig. 1 aufgenommen wurde;

Figur 5     eine Überlagerung der beiden Kalibrierbilder aus Fig. 3 und 4;

Figur 6     einen vergrößerten Ausschnitt von Fig. 5 zur Veranschaulichung, wie mit den Kalibrierbildern gemäß Fig. 3 und 4 Kalibrierdaten gewonnen werden; und

Figur 7     ein Schema zur Erläuterung, wie Strukturelemente des projizierten Strukturmusters in den Kamerabildern identifiziert werden.

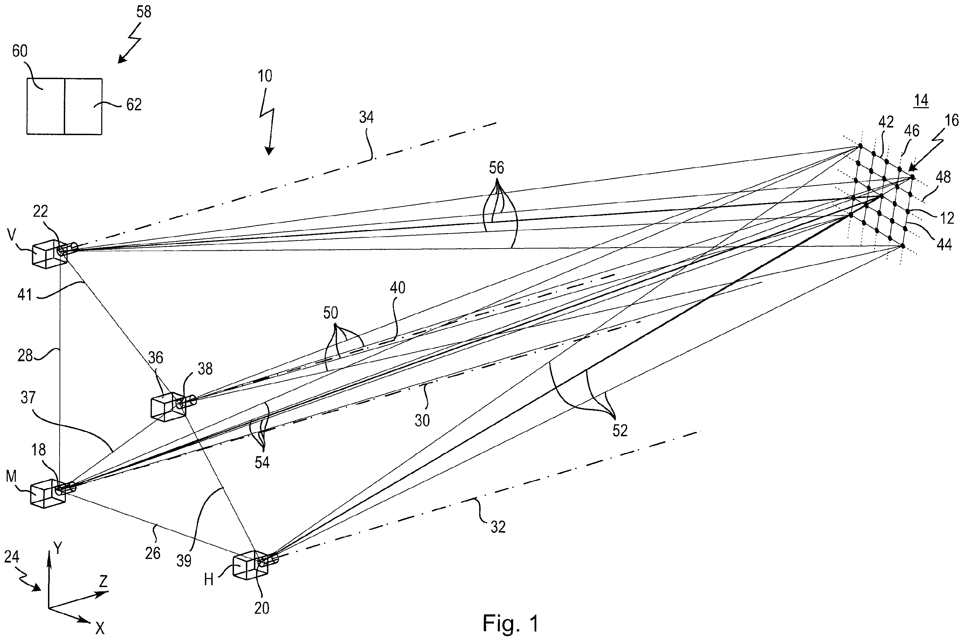

In Fig. 1 ist eine mit dem allgemeinen Bezugszeichen 10 versehene Vorrichtung zum Identifizieren von Strukturelementen 12 eines auf eine Szene 14 projizierten Strukturmusters 16 in Kamerabildern gezeigt.

Die Vorrichtung 10 wird insbesondere zum Überwachen, insbesondere Absichern eines Gefahrenbereichs, insbesondere eines Gefahrenbereichs einer Maschine (nicht dargestellt) verwendet. Die Szene 14 ist dann beispielsweise ein dreidimensionaler Raumbereich, in dem sich eine Maschine, insbesondere eine automatisiert arbeitende Maschine befindet, wie etwa eine Presse oder ein Roboter (nicht dargestellt). Allgemein können in der Szene 14 bewegliche Objekte, beispielsweise Personen, vorhanden sein, wobei die Vorrichtung 10 die Szene 14 daraufhin überwacht, ob sich ein Objekt ganz oder teilweise in dem Gefahrenbereich der automatisiert arbeitenden Maschine befindet oder dorthin begibt.

Die Vorrichtung 10 weist eine erste Kamera M, eine zweite Kamera H und optional, jedoch bevorzugt, eine dritte Kamera V auf. Die Kameras M, H und V sind beispielsweise Digitalkameras, die jeweils einen optoelektronischen Bildsensor (nicht dargestellt) aufweisen. Die Bildsensoren können in CCD- oder CMOS-Technologie ausgeführt sein. Derartige Bildsensoren weisen eine Vielzahl von lichtempfindlichen Elementen (auch als Pixel bezeichnet) auf, die in einer Vielzahl von parallel zueinander angeordneten Bildzeilen angeordnet sind.

Die Kameras M, H und V weisen jeweils eine Eintrittspupille 18, 20 bzw. 22 auf, die alle in einer selben Ebene angeordnet sind. In Fig. 1 ist als Bezugssystem für die Zwecke der Veranschaulichung ein kartesisches Koordinatensystem 24 eingezeichnet, mit einer x-Achse, einer y-Achse und einer z-Achse. Die vorstehend genannte Ebene, in der die Eintrittspupillen 18, 20 und 22 der Kamera M, H und V angeordnet sind, sei hier die xy-Ebene mit z = 0. Das Koordinatensystem 24 als Bezugssystem ist hier so gelegt, dass sich die Eintrittspupille 18 der Kamera M an den Koordinaten x = 0, y = 0 und z = 0 befindet.

Eine Verbindungsgerade 26 zwischen der Kamera M und der Kamera H erstreckt sich entsprechend in Richtung der x-Achse, und eine Verbindungsgerade 28 zwischen der Kamera M und der Kamera V erstreckt sich in Richtung der y-Achse. Die dritte Kamera V befindet sich somit außerhalb der Verbindungsgeraden 26 zwischen der Kamera M und der Kamera H.

Der Abstand zwischen der Kamera M und der Kamera H ist von dem Abstand zwischen der Kamera V und der Kamera M verschieden.

Die Kameras M, H und V sind weiterhin so positioniert und orientiert, dass ihre jeweilige optische Achse 30 (Kamera M), 32 (Kamera H) und 34 (Kamera V) parallel zueinander verlaufen.

Die Vorrichtung 10 weist weiterhin einen Projektor 36 zum Erzeugen und Projizieren des Strukturmusters 16 in die Szene 14 auf. Der Projektor 36 kann beispielsweise als Laserdiode mit diffraktivem optischen Element, als LED-Matrix mit Abbildungsoptik, als Diaprojektor, als Punktlichtquelle mit Facettenspiegel oder als digital light processing (DLP oder DMP)-Projektor ausgebildet sein.

Eine Austrittspupille 38 des Projektors 36 liegt in derselben Ebene wie die Eintrittspupillen 18, 20 und 22 der Kameras M, H und V. Eine optische Achse 40 des Projektors 36 verläuft parallel zu den optischen Achsen 30, 32 und 34 der Kameras M, H und V.

Der Projektor 36 befindet sich außerhalb der Verbindungsgeraden 26 zwischen der Kamera M und der Kamera H und auch außerhalb der Verbindungsgeraden 28 zwischen der Kamera M und der Kamera V. In Fig. 1 sind des Weiteren Verbindungsgeraden zwischen den Kameras M, H und V und dem Projektor 36 eingezeichnet, und zwar eine Verbindungsgerade 37 zwischen der Kamera M und dem Projektor 36, eine Verbindungsgerade 39 zwischen der Kamera H und dem Projektor 36, und eine Verbindungsgerade 41 zwischen der Kamera V und dem Projektor 36. Wie aus Fig. 1 hervorgeht, verlaufen die Verbindungsgeraden 37, 39 und 41 sowohl schräg zueinander als auch schräg zu den Verbindungsgeraden 26 und 28.

Das Strukturmuster 16 ist ein homogenes Punktmuster, das heißt die Strukturelemente 12 sind einzelne Punkte, die entlang zweier Hauptachsen 42, 44 periodisch und gleichmäßig verteilt sind. Die Hauptachsen 42 und 44 sind hier lediglich zur Veranschaulichung eingezeichnet und finden sich in dem in der Praxis projizierten Strukturmuster 16 nicht wieder. Die beiden Hauptachsen 42, 44, die hier senkrecht zueinander verlaufen, geben die beiden Richtungen der kleinsten Abstände der Punkte bzw. der Strukturelemente 12 des Strukturmusters 16 an.

Das vom Projektor 36 projizierte Strukturmuster 16 wird vorzugsweise derart projiziert, dass die Hauptachsen 42 und 44 des projizierten Strukturmusters 16 schräg zu den Verbindungsgeraden 26 und 28 und außerdem schräg zu den Verbindungsgeraden 37, 39 und 41 verlaufen.

In Fig. 1 ist das Strukturmuster 16 nur ausschnittsweise mit 25 Punkten bzw. Strukturelementen 12 gezeigt. In der Praxis weist das Strukturmuster 16 eine wesentlich höhere Anzahl an Strukturelementen 12 auf, was hier mit unterbrochenen Fortsetzungslinien 46 und 48 angedeutet ist.

Der Abstand der einzelnen Strukturelemente bzw. -punkte 12 beträgt vorzugsweise 4 bis 10 Pixel der Bildsensoren der Kameras M, H und V. Der zu wählende Abstand zwischen den einzelnen Strukturelementen 12 des Strukturmusters 16 wird von der Genauigkeit abhängen, mit der im Bild der Kameras M, H und V die Koordinaten eines Strukturelements bzw. -punktes 12 bestimmt werden können.

Die Strukturelemente 12 können nur einen Teilbereich der in den Kameras M, H und V abgebildeten Szene 14 beleuchten, typischerweise ist aber der Öffnungswinkel der von dem Projektor 36 kommenden Beleuchtung mindestens so groß wie der volle Bild- bzw. Gesichtsfeldwinkel der Kameras M, H und V, so dass die Bilder in den Kameras M, H und V vollständig mit Strukturelementen 12 belegt sind.

In Fig. 1 sind für das vom Projektor 36 emittierte Beleuchtungslicht, das das Strukturmuster 16 projiziert, einzelne Sendestrahlen 50 exemplarisch eingezeichnet. Ebenso sind in Fig. 1 für die Kamera H exemplarisch Empfangsstrahlen 52, für die Kamera M Empfangsstrahlen 54 und für die Kamera V Empfangsstrahlen 56 eingezeichnet, die von den einzelnen Strukturelementen 12 ausgehen. Mit den Kameras M, H und V wird somit das auf die Szene 14 projizierte Strukturmuster 16 aufgefangen.

Die Vorrichtung 10 weist weiterhin eine Steuereinrichtung 58 mit einer Speichereinheit 60 und einer Recheneinheit 62 auf. Die Speichereinheit 60 und die Recheneinheit 62 sind mit den Kameras M, H und V und mit dem Projektor 36 zwecks wechselseitigem Datenaustausch verbunden (nicht dargestellt).

Aufgrund der hier vorzugsweise gewählten Anordnung, bei der die Austrittspupille 38 des Projektors 36 und die Eintrittspupillen der Kameras M, H und V in einer gemeinsamen Ebene senkrecht zur optischen Achse 30, 32 und 34 der Kameras M, H und V liegen, erscheint das in den Kameras M, H und V abgebildete Strukturmuster 16 unabhängig vom Abstand des projizierten Strukturmusters 16 zu den Kameras M, H und V stets gleich groß. Genauer gesagt ändert sich der Abstand zwischen den einzelnen Strukturelementen 12 in den Bildern der Kameras M, H und V nicht, wenn sich der Abstand des projizierten Strukturmusters 16 zu den Kameras M, H und V ändert.

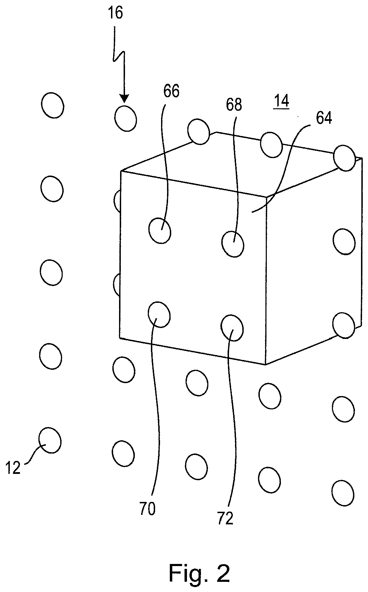

Fig. 2 zeigt einen Ausschnitt der Szene 14 in gegenüber Fig. 1 vergrößertem Maßstab mit einem darin befindlichen Objekt 64, der hier vereinfacht als Quader dargestellt ist. In Fig. 2 sind vier der Strukturelemente 12 mit den Bezugszeichen 66, 68, 70 und 72 versehen, wobei diese Strukturelemente bzw. -punkte einen geringeren Abstand zu den Kameras M, H und V aufweisen als die übrigen Strukturelemente 12. Nichtsdestoweniger bleibt der wechselseitige Abstand der Strukturelemente 66, 68, 70 und 72 in den Kamerabildern der Kameras M, H und V gegenüber einer Situation, in der das Objekt 64 nicht in der Szene 14 vorhanden ist, unverändert.

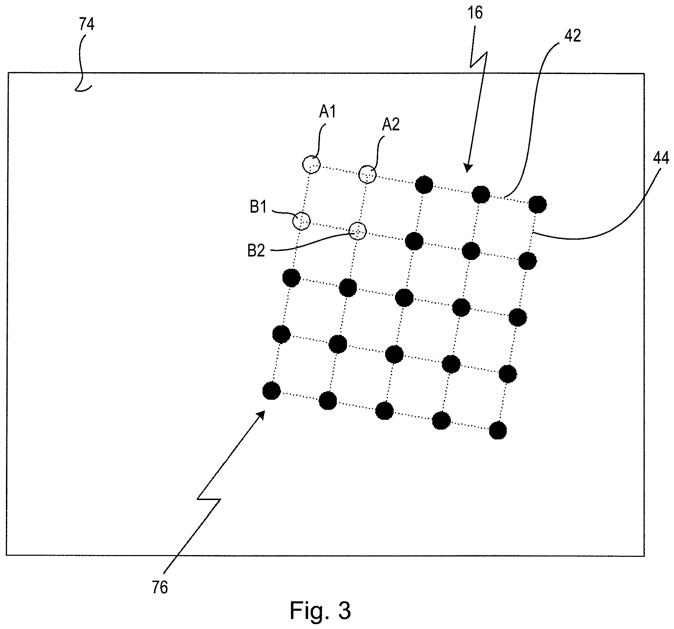

Ein Grundprinzip des Verfahrens zum Identifizieren der einzelnen Strukturelemente 12 des auf die Szene 14 projizierten Strukturmusters 16 in den Kalibrierbildern der Kameras M, H und V besteht in der genauen Kenntnis von der Lage und Orientierung des Projektors 36, d.h. dem Sende-Ort des Projektionslichtes und der SendeRichtung für jedes einzelne Strukturelement 12, und von der Lage und Orientierung der Kameras M, H und V, d.h. dem Empfangs-Ort und der Empfangsrichtung der Lichtstrahlen, die von den einzelnen Strukturelementen 12 kommen. Hierzu werden Kalibrierbilder aufgenommen, wie nachfolgend mit Bezug auf Fig. 3 bis 6 beschrieben wird.

Die Kalibrierbilder werden bei unveränderter Anordnung der Kameras M, H und V sowie des Projektors 36 aufgenommen, das heißt mit den gleichen Lagen und Orientierungen der Kameras M, H und V und des Projektors 36, die später bei dem Verfahren zum Identifizieren der auf die Szene 14 projizierten Strukturelemente 12 in den Bildern der Kameras M, H und V vorliegt.

Zunächst wird mit den Kameras M, H und V ein erstes Kalibrierbild aufgenommen, wobei das Strukturmuster 16 von dem Projektor 36 auf eine ebene Fläche in einem ersten Abstand zu den Kameras M, H und V und zu dem Projektor 36 projiziert wird. Beispielhaft für die Kamera M ist in Fig. 3 eine Bildfläche 74 des Bildsensors der Kamera M gezeigt, mit der das auf die erste ebene Fläche projizierte Strukturmuster 16 als Kalibrierbild 76 aufgenommen wird.

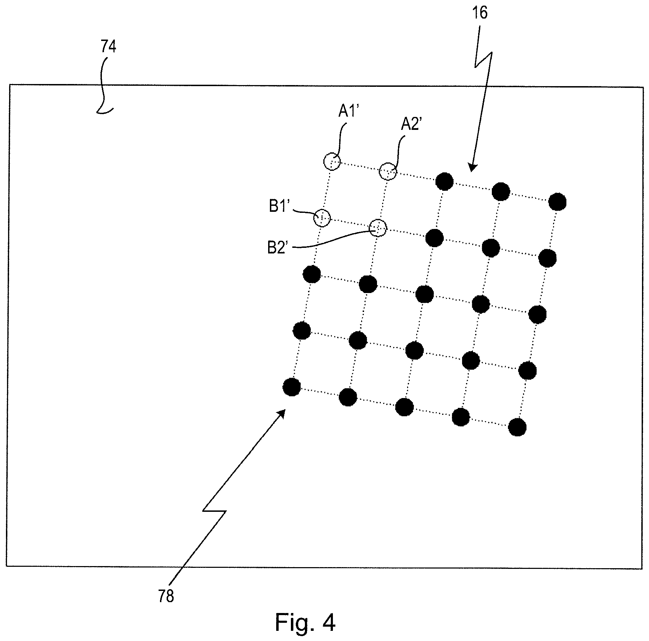

Anschließend wird mit den Kameras M, H und V zumindest ein zweites Kalibrierbild aufgenommen, wobei das Strukturmuster 16 von dem Projektor 36 auf eine ebene Fläche in zumindest einem zweiten Abstand zu den Kameras M, H und V und zu dem Projektor 36 projiziert wird, wobei der zumindest eine zweite Abstand größer oder kleiner als der erste Abstand ist. Fig. 4 zeigt beispielhaft die Aufnahme eines zweiten Kalibrierbildes 78 mittels der Kamera M.

Die ebene Fläche ist bei der Aufnahme der Kalibrierbilder senkrecht zu den optischen Achsen 30, 32 und 34 orientiert.

Es können auch mehr als zwei Kalibrierbilder in mehreren verschiedenen Abständen des projizierten Strukturmusters 16 aufgenommen werden.

Die Kalibrierbilder, die mit den Kameras M, H und V aufgenommen wurden, werden abgespeichert, beispielsweise in der Speichereinheit 60.

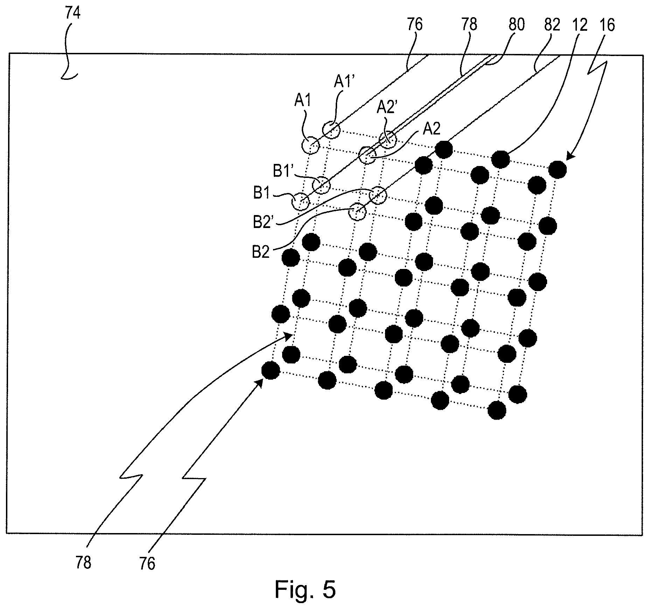

Fig. 5 zeigt die Überlagerung der beiden Kalibrierbilder 76, 78, die mit der Kamera M gemäß Fig. 3 und 4 aufgenommen wurden. Wie bereits zuvor erwähnt, bleibt der Abstand der einzelnen Strukturelemente 12 untereinander trotz der unterschiedlichen Abstände des projizierten Strukturmusters 16 von den Kameras M, H und V in den Kalibrierbildern der Kameras M, H und V stets gleich.

Aus Fig. 5 geht hervor, dass sich die einzelnen Strukturelemente 12 in dem Kalibrierbild 78 gegenüber dem Kalibrierbild 76 verschoben haben. Aus den beispielsweise in der Speichereinheit 60 abgespeicherten Kalibrierbildern gemäß Fig. 3 und 4 werden nun, beispielsweise von der Recheneinheit 62, Kalibrierdaten gewonnen, die für die einzelnen Strukturelemente 12 jeweils Kombinationen aus ersten Parametern, die das jeweilige Strukturelement 12 mit der Lage und Orientierung der Kamera M und des Projektors 36 korrelieren, aus zweiten Parametern, die das jeweilige Strukturelement 12 mit der Lage und Orientierung der Kamera H und des Projektors 36 korrelieren, und aus dritten Parametern aufweisen, die das jeweilige Strukturelement 12 mit der Lage und Orientierung der Kamera V und des Projektors 36 korrelieren.

Für die weitere Erläuterung der Kalibrierung sind im Kalibrierbild 76 in Fig. 3 beispielhaft vier der Strukturelemente 12 mit A1, A2, B1 und B2 bezeichnet, und im Kalibrierbild 78 in Fig. 4 sind die zu den Strukturelementen A1, A2, B1, B2 zugehörigen, gegenüber dem Kamerabild 76 verschobenen Strukturelemente mit A1', A2', B1' und B2' bezeichnet.

Legt man nun durch die Paare von zugehörigen Strukturelementen A1, A1'; A2, A2'; B1, B1'; und B2, B2' jeweils eine Gerade, so ergeben sich gemäß Fig. 5 Geraden 76, 78, 80, 82.

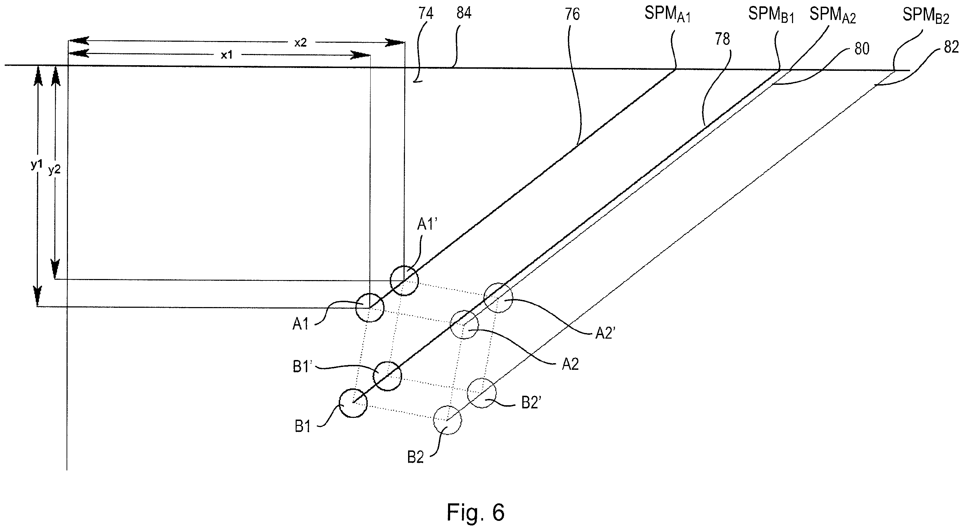

Fig. 6 zeigt in vergrößertem Maßstab zur Vereinfachung nur die Bilder der Strukturelemente A1, A1', A2, A2', B1, B1' und B2, B2' in der Bildebene 74 der Kamera M. Ebenso sind in Fig. 6 die Geraden 76, 78, 80 und 82 eingezeichnet. Die Geraden 76, 78, 80 und 82 sind sogenannte Beleuchtungs-Epipolaren. Wie aus Fig. 6 hervorgeht, sind alle Beleuchtungs-Epipolaren 76, 78, 80, 82 parallel zueinander, was durch die hier bevorzugte Lage des Projektors 36 auf derselben Höhe in Richtung der z-Achse wie die Kamera M bedingt ist. Die Beleuchtungs-Epipolaren 76, 78, 80 und 82 haben somit eine gleiche Steigung StM, unterscheiden sich jedoch durch einen jeweiligen Schnittpunkt SPM$_{A1}$, SPM$_{B1}$, SPM$_{A2}$ und SPM$_{B2}$ mit einer Bezugsachse 84 der Kamera M. Als Bezugsachse 84 wird beispielsweise die erste Bildzeile des Bildsensors der Kamera M verwendet.

Wie aus Fig. 6 hervorgeht, liegt jedes abgebildete Strukturelement A1, A2, B1, B2 immer auf derselben Beleuchtungs-Epipolaren 76, 78, 80 bzw. 82, sein Ort auf dieser Beleuchtungs-Epipolaren hängt jedoch vom Abstand des jeweiligen projizierten Strukturelements A1, A2, B1, B2 zur Kamera M ab, wie mit den verschobenen Strukturelementen A1', A2', B1' und B2' veranschaulicht ist. Des Weiteren liegt auf der jeweiligen Beleuchtungs-Epipolaren zu dem jeweiligen Strukturelement A1, A2, B1, B2 nicht nur dessen Abbild in der Kamera M, sondern auch das in die Szene (oder bei der Kalibrierung auf die ebene Fläche) projizierte Strukturelement selbst.

Des Weiteren sind die Beleuchtungs-Epipolaren 76, 78, 80 und 82 aufgrund der Lage und Orientierung der Kamera M und des Projektors 36 auf gleicher Höhe in Richtung der z-Achse und deren paralleler optischer Achsen 30 und 40 (Fig. 1) parallel zur Verbindungsgeraden 37 (Fig. 1) der Kamera M und des Projektors 36.

Während hier in Fig. 6 beispielhaft vier Beleuchtungs-Epipolaren 76, 78, 80, 82 für die Strukturelemente A1, A2, B1, B2 gezeigt sind, versteht es sich, dass jedem der Strukturelemente 12 des Strukturmusters 16 eine Beleuchtungs-Epipolare in Bezug auf die Kamera M zugeordnet ist.

Entsprechende Verhältnisse gelten für die jeweiligen Strukturelemente 12 in Bezug auf die Kamera H und die Kamera V. Jedem Strukturelement 12 des projizierten Strukturmusters 16 ist eine Beleuchtungs-Epipolare, die zur Kamera H, gehört, zugeordnet, und eine Beleuchtungs-Epipolare, die zur Kamera V gehört. Die zur Kamera H gehörigen Beleuchtungs-Epipolaren sind wiederum untereinander parallel und parallel zur Verbindungsgeraden 39 (Fig. 1), und die zur Kamera V gehörigen Beleuchtungs-Epipolaren sind ebenfalls parallel untereinander und parallel zur Verbindungsgeraden 41 (Fig. 1).

Des Weiteren weisen die Beleuchtungs-Epipolaren, die zur Kamera H gehören, jeweils einen Schnittpunkt SPH mit einer Bezugsachse, beispielsweise der ersten Bildzeile der Kamera H auf, und die Beleuchtungs-Epipolaren, die zur Kamera V gehören, weisen ebenfalls jeweils einen Schnittpunkt SPH mit einer Bezugsachse, beispielsweise der ersten Bildzeile der Kamera V auf.

Beispielhaft gilt gemäß Figur 6 für den Schnittpunkt SPM$_{A1}$ der Beleuchtungs-Epipolaren 76 zu dem Strukturelement A1 mit der Bezugsachse 84 der Kamera M die Gleichung:

$$SPM_{A1} = x1-(y1*(x2-x1)/(y2-y1)).$$

Für die Steigung StM dieser Beleuchtungs-Epipolaren zu dem Strukturelement A1 gilt:

$$StM = (y1-y2/(x1-x2).$$

Wie bereits erwähnt, ist StM für alle Beleuchtungs-Epipolaren gleich.

In gleicher Weise lassen sich aus den Kalibrierbildern, die mit den Kameras H und V aufgenommen wurden, die Schnittpunkte SPH und Steigungen StH der zur Kamera H gehörigen Beleuchtungs-Epipolaren und die Schnittpunkte SPV und Steigungen StV der zur Kamera V gehörigen Beleuchtungs-Epipolaren berechnen.

Wenn der Projektor 36 in Richtung der z-Achse in Fig. 1 einen Abstand zu den Kameras M, H und V aufweisen würde, wären die Beleuchtungs-Epipolaren, die zur jeweiligen Kamera M, H oder V gehören, nicht untereinander parallel, sondern hätten unterschiedliche Steigungen, würden aber stets von demselben Strukturelement ausgehen.

Zu jedem der Strukturelemente 12 des projizierten Strukturmusters 16 werden die berechneten Parameter SPM, SPH und SPV in der Speichereinheit 60 abgelegt. Ebenso werden die Steigungen StM, StH und StV in der Speichereinheit 60 abgelegt, wobei sich für die Steigungen StM, StH und StV in dem hier bevorzugten Ausführungsbeispiel jeweils nur ein Wert ergibt.

In der Speichereinheit 60 werden vorzugsweise alle Strukturelemente 12 des projizierten Strukturmusters 16 mit den zugeordneten Parametern SPM, SPH und SPV sowie die Parameter StM, StH und StV in Form einer Kalibrierliste abgelegt. Dabei ist jedes Strukturelement 12 durch die individuelle Kombination aus SPM, SPH und SPV eindeutig beschrieben.

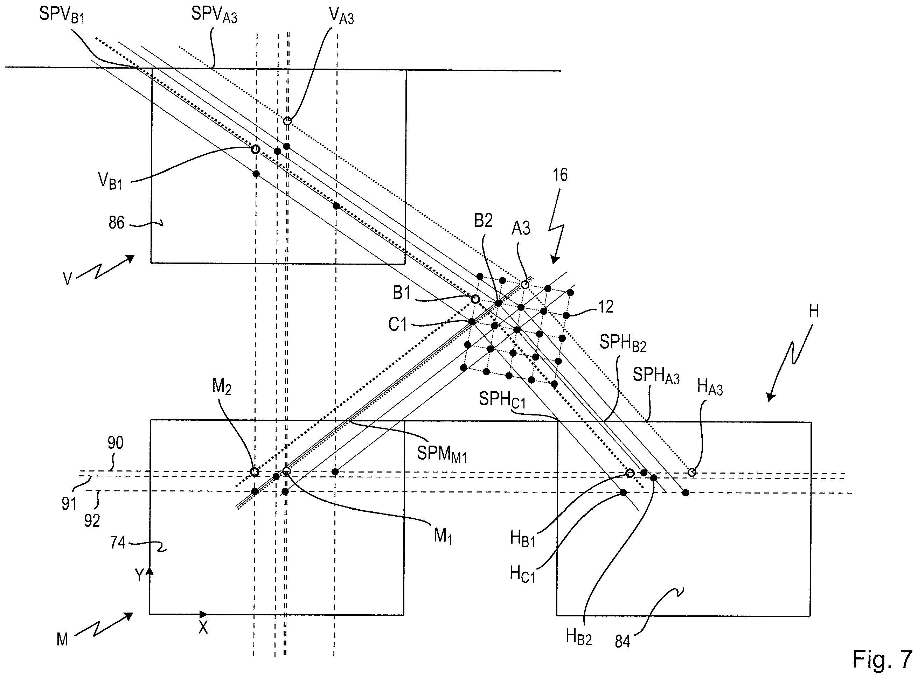

Mit Bezug auf Fig. 7 wird nun beschrieben, wie mittels der zuvor beschriebenen Kalibrierdaten die einzelnen Strukturelemente 12 des in die Szene 14 gemäß Fig. 1 projizierten Strukturmusters 16 in den Kamerabildern der Kameras M, H und V identifiziert werden können, oder mit anderen Worten, wie die in den Kameras M, H und V abgebildeten Strukturelemente 12 den projizierten Strukturelementen 12 eindeutig zugeordnet werden können.

In Fig. 7 ist in einer ebenen Projektionsdarstellung das projizierte Strukturmuster 16 gezeigt, ebenso die Bildfläche 74 der Kamera M, eine Bildfläche 84 der Kamera H und eine Bildfläche 86 der Kamera V.

Nachfolgend wird exemplarisch beschrieben, wie ein in der Bildfläche 74 der Kamera M abgebildetes Strukturelement $M_1$ sicher identifiziert, das heißt einem der projizierten Strukturelemente 12 eindeutig zugeordnet werden kann.

Zunächst werden in der Bildfläche 74 die Pixelkoordinaten $M_x$ und $M_y$ des abgebildeten Strukturelements $M_1$ bestimmt. Dies ist in der Praxis nur mit einer gewissen Genauigkeit möglich, so dass sich die wahre Position des Strukturelements $M_1$ in einem Toleranzband befindet.

Aus den Pixelkoordinaten $M_x$ und $M_y$ wird zunächst mittels der Recheneinheit 62 eine Gerade berechnet, die die Beleuchtungs-Epipolare ist, auf der sich das Strukturelement $M_{xy}$ befindet:

$$SPM_{M1} = M_x - (M_y/StM)$$

Die Steigung StM ist, wie bereits oben ausgeführt wurde, für alle Beleuchtungs-Epipolaren, die zur Kamera M gehören, gleich und daher in der Speichereinheit 60 abgelegt und kann von dieser einfach ausgelesen werden. Somit kann $SPM_{M1}$, also der Schnittpunkt der Beleuchtungs-Epipolaren, auf der das Strukturelement $M_1$ liegt, in einfacher Weise berechnet werden.

Aufgrund der nicht exakt möglichen Bestimmung der Pixelkoordinaten $M_x$ und $M_y$ liegt $SPM_{M1}$ innerhalb eines Toleranzbandes.

Als nächstes werden nun aus der Kalibrierliste, die in der Speichereinheit 60 abgelegt ist, alle Strukturelemente 12 des projizierten Strukturmusters 16 ausgelesen, denen in der Kalibrierliste ein jeweiliges SPM zugeordnet ist, das sich innerhalb des Toleranzbandes des Wertes von $SPM_{M1}$ befindet.

Wie aus Fig. 7 hervorgeht, liegt die Beleuchtungs-Epipolare, auf der sich das abgebildete Strukturelement $M_1$ befindet, sehr nahe neben zwei weiteren Beleuchtungs-Epipolaren, die jeweils ein SPM aufweisen, das innerhalb des Toleranzbandes des berechneten Wertes $SPM_{M1}$ liegt.

Innerhalb des Toleranzbandes des Parameters $SPM_{M1}$ kommen als Kandidaten-Strukturelemente des projizierten Strukturmusters 16 für die Zuordnung zu dem abgebildeten Strukturelement $M_1$ die Strukturelemente C1, B2 und A3 in Frage, die alle auf einer jeweiligen Beleuchtungs-Epipolare mit einem SPM innerhalb des Toleranzbandes von $SPM_{M1}$ liegen. Die Strukturelemente C1, B2, A3 werden aus der Kalibrierliste samt deren zugeordnete Parameter $SPH_{C1}$, $SPH_{B2}$, $SPH_{A3}$, $SPV_{C1}$, $SPV_{B2}$, $SPV_{A3}$ ausgelesen, die sich allesamt unterscheiden.

Für jedes der Strukturelemente C1, B2 und A3 kann nun von der Recheneinheit 62 berechnet werden, wo und auf welcher Kamera-Epipolaren es im Bild der Kamera H und im Bild der Kamera V liegen würde.

Aufgrund der hier bevorzugten Lage und Orientierung der Kameras M und H auf gleicher Höhe mit parallelen optischen Achsen sind die Kamera-Epipolaren der Kamera M und der Kamera H, von denen in Fig. 7 durch unterbrochene Linien 90, 91, 92 drei exemplarisch gezeigt sind, parallel zueinander fluchtend ausgerichtet. Dasjenige der projizierten Strukturelemente 12, hier dasjenige der Kandidaten C1, B2 oder A3, dessen Abbild in der Kamera M das abgebildete Strukturelement $M_1$ ist, liegt im Bild der Kamera H auf einer Kamera-Epipolaren, die den gleichen y-Wert $H_y$ hat wie die Kamera-Epipolare, auf der das abgebildete Strukturelement $M_1$ im Bild der Kamera M liegt, d.h.: $H_y = M_y$.

Wenn sich eines der Kandidaten-Strukturelemente C1, B2, A3 dem abgebildeten Strukturelement $M_1$ eindeutig zuordnen lassen würde, muss für das zutreffende Strukturelement C1, B2, A3 ein x-Wert auf der Kamera-Epipolaren der Kamera H mit dem y-Wert $H_y$ existieren, d.h. die Gleichung:

$$H_x = SPH_{C1;B2;A3} + M_y/StH$$

muss für das zutreffende Strukturelement C1, B2, A3 eine Lösung für $H_x$ haben. Diese Berechnung kann ebenfalls von der Recheneinheit durchgeführt werden.

Wie aus Fig. 7 hervorgeht, gibt es nur für das Strukturelement A3 eine Lösung für $H_x$, während für die Strukturelemente C1 und B2 die vorstehend genannte Gleichung nicht erfüllt ist. Wie aus Fig. 7 hervorgeht, liegt das Abbild $H_{C1}$ des Strukturelements C1 im Bild der Kamera H auf einer anderen Kamera-Epipolaren als das zu identifizierende Strukturelement $M_1$, und zwar auf der Kamera-Epipolaren 92, und auch das Abbild $H_{B2}$ des projizierten Strukturelements B2 liegt im Bild der Kamera H auf einer anderen Kamera-Epipolaren als das zu identifizierende abgebildete Strukturelement $M_1$, nämlich der Kamera-Epipolaren 91. Lediglich $M_1$ und das Abbild $H_{A3}$ von A3 im Bild der Kamera M liegen auf der selben Kamera-Epipolaren 90.

Somit kann nur das Abbild $H_{A3}$ des Strukturelements A3 in der Kamera H dem Bild $M_1$ im Bild der Kamera M wechselseitig eindeutig zugeordnet werden, wobei zur Kontrolle dies mit der Gleichung

$$M_x = SPM_{A3} + M_y/StM$$

verifiziert werden kann. $SPM_{A3}$ ist dabei aus der Kalibrierliste bekannt.

Damit ist es das projizierte Strukturelement A3, das dem Bild $M_1$ im Bild der Kamera M eindeutig zugeordnet werden kann. Umgekehrt gilt dies auch für das Bild $H_{A3}$ im Bild der Kamera H.

Ein weiteres exemplarisches zu identifizierendes Strukturelement im Bild der Kamera M ist mit $M_2$ bezeichnet. Mit der gleichen Vorgehensweise wie in Bezug auf das Bild $M_1$ beschrieben ergibt sich, dass dem Strukturelement $M_2$ im Bild der Kamera M das Bild $H_{B1}$ des Strukturelements B1 wechselseitig eindeutig zugeordnet werden kann.

Das Abbild des Strukturelements A3 in der Kamera V ist in Fig. 7 mit $V_{A3}$, und das Abbild des Strukturelements B1 in der Kamera V ist mit $V_{B1}$ bezeichnet. Die dritte Kamera V ist für das hier beschriebene Verfahren nicht zwingend erforderlich, sondern optional vorhanden. Die dritte Kamera V kann zur weiteren Verifikation der wechselseitig eindeutigen Zuordnung von Strukturelementen in den Bildern der Kameras M und H verwendet werden. Sie ist insbesondere dann nützlich, wenn ein Strukturelement 12 in einer der Kameras M, H nicht sichtbar ist, beispielsweise bei Verdeckung durch einen Absatz oder eine Kante, wobei die eindeutige Zuordnung dieses Strukturelements mit der Kamera V in Verbindung mit derjenigen der Kameras M und H, die das betreffende Strukturelement sehen kann, möglich ist. Auch wenn eine der Kameras streifend auf eine Fläche in der Szene 14 blickt, ist eine dritte Kamera hilfreich.

Nachdem die einzelnen Strukturelemente 12 des projizierten Strukturmusters 16 in den Bildern der Kameras M, H und/oder V sicher identifiziert sind, können Abstandsbestimmungen für die projizierten Strukturelemente 12 durchgeführt werden, die zu einem korrekten Abstand führen. Fehlabschaltungen einer überwachten Maschine oder gefährliche Situationen können durch das vorstehend beschriebene Verfahren vermieden werden.

Zur Kontrasterhöhung der Bilder der Strukturelemente 12 in den Kameras M, H und V kann zusätzlich vorgesehen sein, dass der Projektor 36 das Strukturmuster 16 gepulst mit einer Pulsfrequenz sendet, die einer halben Bildaufnahmefrequenz der Kameras M, H und V entspricht, wobei jeweils zwei aufeinanderfolgende von den Kameras M, H und V aufgefangene Bilder voneinander subtrahiert werden. Hierdurch bleiben in den Kamerabildern M, H und V effektiv nur die Abbilder der Strukturelemente 12 übrig, während die Szene 14 selbst und die darin befindlichen Objekte nicht in den Kamerabildern zu sehen sind.

Es versteht sich, dass die vorliegende Erfindung nicht auf das vorstehend beschriebene Ausführungsbeispiel beschränkt ist. So ist die Funktion des erfindungsgemäßen Verfahrens und der erfindungsgemäßen Vorrichtung nicht darauf beschränkt, dass die Kameras M, H und V mit ihren Eintrittspupillen auf gleicher Höhe angeordnet sind, und/oder dass der Projektor 36 mit seiner Austrittspupille ebenfalls in dieser Ebene angeordnet ist. Auch ist es nicht erforderlich, dass die optischen Achsen der Kameras M, H und V und diejenige des Projektors 36 parallel zueinander sind. Außerdem kann anstelle eines periodischen Strukturmusters auch ein nichtperiodisches oder zufallsverteiltes Strukturmuster verwendet werden.

## Patentansprüche

1. Verfahren zum Identifizieren von einzelnen Strukturelementen (12) eines auf eine Szene (14) projizierten Strukturmusters (16) in Kamerabildern, wobei mittels eines Projektors (36) das Strukturmuster (16) auf die Szene (14) projiziert wird, und wobei mittels einer ersten Kamera (M) und zumindest einer zweiten Kamera (H, V) das auf die Szene (14) projizierte Strukturmuster (16) aufgefangen wird, wobei die erste Kamera (M) und die zumindest eine zweite Kamera (H; V) im Abstand voneinander positioniert sind, und wobei der Projektor (36) außerhalb einer Verbindungsgeraden (26, 28) der ersten und zumindest einen zweiten Kamera (M, H, V) im Abstand zur ersten Kamera (M) und zur zumindest einen zweiten Kamera (H, V) positioniert ist, wobei mittels durch Aufnahme von Kalibrierbildern (76, 78) des vom Projektor (36) projizierten Strukturmusters (16) mit der ersten und zumindest einen zweiten Kamera (M, H, V) gewonnener Kalibrierdaten, die für die einzelnen Strukturelemente (12) jeweils Kombinationen aus ersten Parametern, die das jeweilige Strukturelement (12) mit der Lage und Orientierung der ersten Kamera (M) und des Projektors (36) korrelieren, und aus zumindest zweiten Parametern aufweisen, die das jeweilige Strukturelement (12) mit der Lage und Orientierung der zumindest einen zweiten Kamera (H, V) und des Projektors (36) korrelieren, zu einem im Kamerabild der ersten Kamera (M) zu identifizierenden Strukturelement (12) dasjenige Strukturelement (12) im Kamerabild der zumindest einen zweiten Kamera (V, H) ermittelt wird, das sich wechselseitig eindeutig dem im Kamerabild der ersten Kamera (M) zu identifizierenden Strukturelement (12) zuordnen lässt, **dadurch gekennzeichnet, dass** die ersten Parameter für die einzelnen Strukturelemente (12) Steigungen (StM) und Schnittpunkte (SPM) mit einer ersten Bezugsachse (84) von zur ersten Kamera (M) gehörigen ersten Beleuchtungs-Epipolaren und die zumindest zweiten Parameter für die einzelnen Strukturelemente Steigungen (StH, StV) und Schnittpunkte (SPH, SPV) mit einer zweiten Bezugsachse von zur zumindest einen zweiten Kamera (H, V) gehörigen Beleuchtungs-Epipolaren umfassen, wobei die Beleuchtungs-Epipolaren in der Bildebene der jeweiligen Kamera liegen, und wobei jedes abgebildete Strukturelement immer auf derselben Beleuchtungs-Epipolaren liegt und sein Ort auf dieser Beleuchtungs-Epipolaren vom Abstand des jeweiligen projizierten Strukturelements zur Kamera abhängt.

2. Verfahren nach Anspruch 1, wobei die erste Bezugsachse (84) eine Bildzeile der ersten Kamera (M) und die zweite Bezugsachse eine Bildzeile der zumindest einen zweiten Kamera (H, V) ist.

3. Verfahren nach Anspruch 1 oder 2, wobei zur Aufnahme der Kalibrierbilder (76, 78) das Strukturmuster (16) nacheinander auf eine erste Fläche und eine zweite Fläche projiziert wird, wobei die erste und die zweite Fläche in Senderichtung des Projektors (36) voneinander beabstandet sind.

4. Verfahren nach einem der Ansprüche 1 bis 3, wobei Pixelkoordinaten des im Kamerabild der ersten Kamera (M) jeweiligen zu identifizierenden Strukturelements (12) bestimmt werden, aus den Pixelkoordinaten und den Kalibrierdaten zumindest ein erster Parameter berechnet wird, aus den Kalibrierdaten alle Strukturelemente (12) ausgelesen werden, die, innerhalb eines Toleranzbandes, ebenfalls dem zumindest einen ersten Parameter genügen, weiterhin für jedes dieser ausgelesenen Strukturelemente (12) zumindest einer der zumindest zweiten Parameter ausgelesen wird, und im Kamerabild der zumindest einen zweiten Kamera (H, V) dasjenige Strukturelement (12) ermittelt wird, das sich dem zu identifizierenden Strukturelement (12) im Kamerabild der ersten Kamera (M) wechselseitig eindeutig zuordnen lässt.

5. Verfahren nach einem der Ansprüche 1 bis 4, wobei das auf die Szene (14) projizierte Strukturmuster (16) zusätzlich mittels einer dritten Kamera (V) aufgefangen wird, die außerhalb der Verbindungsgeraden (26) der ersten und zweiten Kamera (M, H) und außerhalb der Verbindungsgeraden (37) der ersten Kamera (M) und dem Projektor (36) und außerhalb der Verbindungsgeraden (39) der zweiten Kamera (H) und dem Projektor (36) positioniert ist, wobei die Kalibrierdaten zusätzlich dritte Parameter aufweisen, die das jeweilige Strukturelement (12) mit der Lage und Orientierung der dritten Kamera (V) und des Projektors (36) korrelieren.

6. Verfahren nach einem der Ansprüche 1 bis 5, wobei die Strukturelemente (12) in zwei zueinander senkrechten, Hauptachsen (42, 44) gleichmäßig über das Strukturmuster (16) verteilt sind, und wobei das Strukturmuster (16) so auf die Szene (14) projiziert wird, dass die zwei Hauptachsen (42, 44) des Strukturmusters (16) schräg zur Verbindungsgeraden (26, 28) der ersten und zumindest einen zweiten Kamera (M, H, V) und/oder schräg zu den Verbindungsgeraden (37, 39, 41) des Projektors (36) und der ersten und der zumindest einen zweiten Kamera (M, H, V) verlaufen.

7. Verfahren nach einem der Ansprüche 1 bis 6, wobei das Strukturmuster (16) gepulst mit einer Pulsfrequenz gesendet wird, die einer halben Bildaufnahmefrequenz der ersten und der zumindest einen zweiten Kamera (M, H, V) entspricht, und wobei jeweils zwei aufeinander folgende von der ersten und zumindest einen zweiten Kamera (M, H, V) aufgefangene Bilder voneinander subtrahiert werden, und/oder wobei mittels eines optischen Filters, der nur im Wellenlängenbereich des Projektionslichts, mit dem das Strukturmuster (16) projiziert wird, durchlässig ist, Umgebungslicht in den Kamerabildern abgeblockt wird.

8. Vorrichtung zum Identifizieren von Strukturelementen (12) eines auf eine Szene (14) projizierten Strukturmusters (16) in Kamerabildern, mit einem Projektor (36) zum Projizieren des Strukturmusters (16) auf die Szene (14), mit einer ersten Kamera (M) und zumindest einer zweiten Kamera (H; V) zum Auffangen des auf die Szene (14) projizierten Strukturmusters (16), wobei die erste Kamera (M) und die zumindest eine zweite Kamera (H; V) im Abstand voneinander positioniert sind, und wobei der Projektor (36) außerhalb einer Verbindungsgeraden (26, 28) der ersten und zumindest einen zweiten Kamera (M, H, V) im Abstand zur ersten Kamera (M) und zur zumindest einen zweiten Kamera (H, V) positioniert ist, mit einer Speichereinheit (60), in der mittels durch Aufnahme von Kalibrierbildern (76, 78) des vom Projektor (36) projizierten Strukturmusters (16) mit der ersten und zumindest einen zweiten Kamera (M, H, V) gewonnene Kalibrierdaten abgelegt sind, die für die einzelnen Strukturelemente (12) jeweils Kombinationen aus ersten Parametern, die das jeweilige Strukturelement (12) mit der Lage und Orientierung der ersten Kamera (M) und des Projektors (36) korrelieren, und aus zumindest zweiten Parametern aufweisen, die das jeweilige Strukturelement (12) mit der Lage und Orientierung der zumindest einen zweiten Kamera (H; V) und des Projektors (36) korrelieren, und mit einer Recheneinheit (62), die dazu eingerichtet ist, mittels der Kalibrierdaten zu einem im Kamerabild der ersten Kamera (M) zu identifizierenden Strukturelement (12) dasjenige Strukturelement (12) im Kamerabild der zumindest einen zweiten Kamera (H; V) zu ermitteln, das sich wechselseitig eindeutig dem im Kamerabild der ersten Kamera (M) zu identifizierenden Strukturelement (12) zuordnen lässt **dadurch gekennzeichnet, dass** die in der Speichereinheit (60) abgelegten ersten Parameter für die einzelnen Strukturelemente (12) Steigungen (StM) und Schnittpunkte (SPM) mit einer ersten Bezugsachse (84) von zur ersten Kamera (M) gehörigen ersten Beleuchtungs-Epipolaren und die zumindest zweiten Parameter für die einzelnen Strukturelemente (12) Steigungen (StH, StV) und Schnittpunkte (SPH, SPV) mit einer zweiten Bezugsachse von zur zumindest einen zweiten Kamera (H, V) gehörigen Beleuchtungs-Epipolaren umfassen, wobei die Beleuchtungs-Epipolaren in der Bildebene der jeweiligen Kamera liegen, und wobei jedes abgebildete Strukturelement immer auf derselben Beleuchtungs-Epipolaren liegt und sein Ort auf dieser Beleuchtungs-Epipolaren vom Abstand des jeweiligen projizierten Strukturelements zur Kamera abhängt.

9. Vorrichtung nach Anspruch 8, wobei die Recheneinheit (62) dazu eingerichtet ist, Pixelkoordinaten des im Kamerabild der ersten Kamera (M) zu identifizierenden Strukturelements (12) zu bestimmen, aus den Pixelkoordinaten und den Kalibrierdaten zumindest einen ersten Parameter zu berechnen, aus den Kalibrierdaten alle Strukturelemente (12) auszulesen, die, innerhalb eines Toleranzbandes, ebenfalls dem zumindest einen ersten Parameter genügen, weiterhin für jedes dieser ausgelesenen Strukturelemente (12) zumindest einer der zumindest zweiten Parameter auszulesen, und im Kamerabild der zumindest einen zweiten Kamera (H, V) dasjenige Strukturelement (12) zu ermitteln, das sich dem zu identifizierenden Strukturelement (12) im Kamerabild der ersten Kamera (M) wechselseitig eindeutig zuordnen lässt.

10. Vorrichtung nach Anspruch 8 oder 9, wobei eine Eintrittspupille (18) der ersten Kamera (M), eine Eintrittspupille (20, 22) der zumindest einen zweiten Kamera (H, V) und eine Austrittspupille (38) des Projektors (36) in einer gemeinsamen Ebene liegen.

11. Vorrichtung nach einem der Ansprüche 8 bis 10, wobei eine optische Achse (30) der ersten Kamera (M), eine optische Achse (32, 34) der zumindest einen zweiten Kamera (H, V) und eine optische Achse (40) des Projektors (36) parallel zueinander sind.

12. Vorrichtung nach einem der Ansprüche 8 bis 11, weiterhin mit einer dritten Kamera (V) zum Auffangen des auf die Szene (14) projizierten Strukturmusters (16), wobei die dritte Kamera (V) außerhalb der Verbindungsgeraden (26) der ersten und zweiten Kamera (M, H) und außerhalb der Verbindungsgeraden (37) der ersten Kamera (M) und dem Projektor (36) und außerhalb der Verbindungsgeraden (39) der zweiten Kamera (H) und dem Projektor (36) positioniert ist, wobei die in der Speichereinheit (62) abgelegten Kalibrierdaten zusätzlich dritte Parameter aufweisen, die das jeweilige Strukturelement (12) mit der Lage und Orientierung der dritten Kamera (V) und des Projektors (36) korrelieren.

13. Verwendung eines Verfahrens nach einem der Ansprüche 1 bis 7 und/oder einer Vorrichtung (10) nach einem der Ansprüche 8 bis 12 zum Überwachen eines Gefahrenbereichs einer Maschine.

**Claims**

1. A method for identifying individual structural elements (12) of a structural pattern (16), which is projected onto a scene (14), in camera images, wherein a projector (36) is used to project the structural pattern (16) onto the scene (14) and wherein a first camera (M) and at least one second camera (H, V) are used to pick up the structural pattern (16), which is projected onto the scene (14), wherein the first camera (M) and the at least one second camera (H; V) are positioned at a distance from one another, and wherein the projector (36) is positioned outside a straight connecting line (26, 28) of the first and at least one second camera (M, H, V) at a distance from the first camera (M) and from the at least one second camera (H, V), wherein, with respect to a structural element (12) that is to be identified in the camera image of the first camera (M), that structural element (12) is determined in the camera image of the at least one second camera (V, H) which can be associated one-to-one with the structural element (12) that is to be identified in the camera image of the first camera (M), by way of calibration data which for the individual structural elements (12) has in each case combinations of first parameters, which correlate the respective structural element (12) with the location and orientation of the first camera (M) and of the projector (36), and of at least second parameters, which correlate the respective structural element (12) with the location and orientation of the at least one second camera (H, V) and of the projector (36), which calibration data is obtained using the first and at least one second camera (M, H, V) by way of recording calibration images (76, 78) of the structural pattern (16) that is projected by the projector (36), **characterized in that** the first parameters for the individual structural elements (12) comprise gradients (StM) and points of intersection (SPM) with a first reference axis (84) of first illumination epipolar lines related to the first camera (M), and the at least second parameters for the individual structural elements comprise gradients (StH, StV) and points of intersection (SPH, SPV) with a second reference axis of illumination epipolar lines related to the at least one second camera (H, V), wherein the illumination epipolar lines are located in the image plane of the respective camera, and wherein each imaged structural element is always located on the same illumination epipolar line and its site on this illumination epipolar line depends on the distance of the respective projected structural element from the camera.

2. The method of claim 1, wherein the first reference axis (84) is a scanning line of the first camera (M), and the second reference axis is a scanning line of the at least one second camera (H, V).

3. The method of claim 1 or 2, wherein, for recording the calibration images (76, 78), the structural pattern (16) is projected sequentially onto a first and onto a second surface, wherein the first and the second surfaces are spaced apart from one another in the transmission direction of the projector (36).

4. The method of any one of claims 1 to 3, wherein pixel coordinates of the respective structural element (12) which is to be identified in the camera image of the first camera (M) are determined, at least a first parameter is calculated from the pixel coordinates and the calibration data, all structural elements (12) which, possibly within a tolerance band, likewise satisfy the at least one first parameter are read from the calibration data, at least one of the at least second parameters is furthermore read for each of said read structural elements (12), and the structural element (12) that can be associated one-to-one with the structural element (12) to be identified in the camera image of the first camera (M) is determined in the camera image of the at least one second camera (H, V).

5. The method of any one of claims 1 to 4, wherein the structural pattern (16) which is projected onto the scene (14) is additionally picked up using a third camera (V) which is positioned outside the straight connecting line (26) of the first and second cameras (M, H) and outside the straight connecting line (37) of the first camera (M) and the projector (36) and outside the straight connecting line (39) of the second camera (H) and the projector (36), wherein the calibration data additionally has third parameters which correlate the respective structural element (12) with the location and orientation of the third camera (V) and of the projector (36).

6. The method of any one of claims 1 to 5, wherein the structural elements (12) are distributed uniformly over the structural pattern (16) in two mutually perpendicular main axes (42, 44), and wherein the structural pattern (16) is projected onto the scene (14) such that the two main axes (42, 44) of the structural pattern (16) extend obliquely with respect to the straight connecting line (26, 28) of the first and at least one second camera (M, H, V) and/or obliquely with respect to the straight connecting line (37, 39, 41) of the projector (36) and the first and the at least one second camera (M, H, V).

7. The method of any one of claims 1 to 6, wherein the structural pattern (16) is transmitted in pulsed fashion having a pulse frequency which corresponds to half the image recording frequency of the first and the at least one second camera (M, H, V), and wherein in each case two sequential images which are picked up by the first and at least one second camera (M, H, V) are subtracted from one another, and/or wherein an optical filter, which is transmissive only in the wavelength range of the projection light with which the projection pattern (16) is projected, is used to block ambient light in the camera images.

8. An apparatus for identifying structural elements (12) of a structural pattern (16), which is projected onto a scene (14), in camera images, comprising a projector (36) for projecting the structural pattern (16) onto the scene (14), further comprising a first camera (M) and at least one second camera (H; V) for picking up the structural pattern (16), which is projected onto the scene (14), wherein the first camera (M) and the at least one second camera (H; V) are positioned at a distance from one another, and wherein the projector (36) is positioned outside a straight connecting line (26, 28) of the first and at least one second camera (M, H, V) at a distance from the first camera (M) and from the at least one second camera (H, V), further comprising a storage unit (60) in which calibration data, obtained using the first and at least one second camera (M, H, V) by way of recording calibration images (76, 78) of the structural pattern (16) that is projected by the projector (36), is stored that has, for the individual structural elements (12), in each case combinations of first parameters, which correlate the respective structural element (12) with the location and orientation of the first camera (M) and of the projector (36), and of at least second parameters, which correlate the respective structural element (12) with the location and orientation of the at least one second camera (H; V) and of the projector (36), and further comprising a calculation unit (62) which is adapted to determine, using the calibration data, with respect to a structural element (12) that is to be identified in the camera image of the first camera (M), that structural element (12) in the camera image of the at least one second camera (H; V) which can be associated one-to-one with the structural element (12) that is to be identified in the camera image of the first camera (M), **characterized in that** the first parameters stored in the storage unit (60) for the individual structural elements (12) comprise gradients (StM) and points of intersection (SPM) with a first reference axis (84) of first illumination epipolar lines related to the first camera (M), and the at least second parameters for the individual structural elements (12) comprise gradients (StH, StV) and points of intersection (SPH, SPV) with a second reference axis of illumination epipolar lines related to the at least one second camera (H, V), wherein the illumination epipolar lines are located in the image plane of the respective camera, and wherein each imaged structural element is always located on the same illumination epipolar line and its site on this illumination epipolar line depends on the distance of the respective projected structural element from the camera.

9. The apparatus of claim 8, wherein the calculation unit (62) is set up to determine pixel coordinates of the structural element (12) which is to be identified in the camera image of the first camera (M), to calculate at least a first parameter from the pixel coordinates and the calibration data, to read all structural elements (12) which, possibly within a tolerance band, likewise satisfy the at least one first parameter from the calibration data, to furthermore read at least one of the at least second parameters for each of said read structural elements (12), and to determine the structural element (12) that can be associated one-to-one with the structural element (12) to be identified in the camera image of the first camera (M) in the camera image of the at least one second camera (H, V).

10. The apparatus of claim 8 or 9, wherein an entrance pupil (18) of the first camera (M), an entrance pupil (20, 22) of the at least one second camera (H, V), and an exit pupil (38) of the projector (36) are located in one common plane.

11. The apparatus of any one of claims 8 to 10, wherein an optical axis (30) of the first camera (M), an optical axis (32, 34) of the at least one second camera (H, V), and an optical axis (40) of the projector (36) are mutually parallel.

12. The apparatus of any one of claims 8 to 11, furthermore comprising a third camera (V) for picking up the structural pattern (16) which is projected onto the scene (14), wherein the third camera (V) is positioned outside the straight connecting line (26) of the first and second camera (M, H) and outside the straight connecting line (37) of the first camera (M) and the projector (36), and outside the straight connecting line (39) of the second camera (H) and the projector (36), wherein the calibration data that is stored in the storage unit (62) additionally has third parameters which correlate the respective structural element (12) with the location and orientation of the third camera (V) and of the projector (36).

13. Use of a method of any one of claims 1 to 7 and/or an apparatus (10) of any one of claims 8 to 12 for monitoring a danger zone of a machine.

**Revendications**

1. Procédé pour identifier des éléments structurels (12) individuels d'un motif structurel (16) projeté sur une scène (14) dans des images de caméra, dans lequel le motif structurel (16) est projeté sur la scène (14) au moyen d'un projecteur (36), et dans lequel le motif structurel (16) projeté sur la scène (14) est capturé au moyen d'une première caméra (M) et d'au moins une deuxième caméra (H, V), dans lequel la première caméra (M) et l'au moins une deuxième caméra (H ; V) sont positionnées distantes l'une de l'autre, et dans lequel le projecteur (36) est positionné, en dehors d'une ligne de liaison (26, 28) de la première et d'au moins une deuxième caméra (M, H, V), à distance de la première caméra (M) et de l'au moins une deuxième caméra (H, V), dans lequel au moyen de données d'étalonnage, acquises avec la première et au moins une deuxième caméra (M, H, V), par le biais d'un enregistrement d'images d'étalonnage (76, 78) du motif structurel (16) projeté par le projecteur (36), qui comprennent respectivement, pour les éléments structurels (12) individuels des combinaisons de premiers paramètres, qui mettent en corrélation l'élément structurel (12) concerné avec la position et l'orientation de la première caméra (M) et du projecteur (36), et d'au moins de deuxièmes paramètres, qui mettent en corrélation l'élément structurel (12) concerné avec la position et l'orientation de l'au moins une deuxième caméra (H, V) et du projecteur (36), dans l'image de caméra de l'au moins une deuxième caméra (V, H) est déterminé, par rapport à un élément structurel (12) à identifier dans l'image de caméra de la première caméra (M), l'élément structurel (12) qui peut être attribué de manière mutuellement univoque à l'élément structurel (12) à identifier dans l'image de caméra de la première caméra (M), **caractérisé en ce que** les premiers paramètres pour les éléments structurels (12) individuels comportent des pentes (StM) et des points d'intersection (SPM) avec un premier axe de référence (84) de premières droites épipolaires d'exposition relatives à la première caméra (M) et les au moins deuxièmes paramètres pour les éléments structurels individuels comportent des pentes (StH, StV) et des points d'intersection (SPH, SPV) avec un second axe de référence de droites épipolaires d'exposition relatives à l'au moins une deuxième caméra (H, V), dans lequel les droites épipolaires d'exposition sont situées dans le plan d'image de la caméra concernée, et dans lequel chaque élément structurel reproduit est toujours situé sur les mêmes droites épipolaires d'exposition et son lieu sur cette droite épipolaire d'exposition dépend de la distance de l'élément structurel projeté concerné à la caméra.

2. Procédé selon la revendication 1, dans lequel le premier axe de référence (84) est une ligne d'image de la première caméra (M) et le second axe de référence est une ligne d'image de l'au moins une deuxième caméra (H, V).

3. Procédé selon la revendication 1 ou 2, dans lequel pour l'enregistrement des images d'étalonnage (76, 78) le motif structurel (16) est projeté successivement sur une première surface et une deuxième surface, dans lequel la première et la deuxième surface sont distantes l'une de l'autre dans une direction de rayonnement du projecteur (36).

4. Procédé selon l'une quelconque des revendications 1 à 3, dans lequel des coordonnées de pixel de l'élément structurel (12) concerné à identifier dans l'image de caméra de la première caméra (M) sont déterminées, à partir des coordonnées de pixel et des données d'étalonnage est calculé au moins un premier paramètre, à partir des données d'étalonnage sont sélectionnés tous les éléments structurels (12) qui, à l'intérieur d'une bande de tolérance, satisfont également l'au moins un premier paramètre, en outre pour chacun de ces éléments structurels (12) sélectionnés est sélectionné au moins un des au moins deuxièmes paramètres, et dans l'image de caméra de l'au moins une deuxième caméra (H, V) est déterminé l'élément structurel (12) qui peut être attribué d'une manière mutuellement univoque dans l'image de caméra de la première caméra (M) à élément structurel (12) à identifier.

5. Procédé selon l'une quelconque des revendications 1 à 4, dans lequel le motif structurel (16) projeté sur la scène (14) est capturé au moyen d'une troisième caméra (V) qui est positionnée en dehors de la ligne de liaison (26) de la première et de la deuxième caméra (M, H) et en dehors de la ligne de liaison (37) de la première caméra (M) et du projecteur (36) et en dehors de la ligne de liaison (39) de la deuxième caméra (H) et du projecteur (36), dans lequel les données d'étalonnage comprennent en plus des troisièmes paramètres qui mettent en corrélation l'élément structurel (12) concerné avec la position et l'orientation de la troisième caméra (V) et du projecteur (36).

6. Procédé selon l'une quelconque des revendications 1 à 5, dans lequel les éléments structurels (12) sont répartis sur deux axes principaux (42, 44) perpendiculaires l'un à l'autre de manière régulière sur le motif structurel (16), et dans lequel le motif structurel (16) est projeté sur la scène (14) de sorte que les deux axes principaux (42, 44) du motif structurel (16) sont inclinés par rapport à la ligne de liaison (26, 28) de la première et de l'au moins une deuxième caméra (M, H, V) et/ou inclinés par rapport à la ligne de liaison (37, 39, 41) du projecteur (36) et de la première et de l'au moins une deuxième caméra (M, H, V).

7. Procédé selon l'une quelconque des revendications 1 à 6, dans lequel le motif structurel (16) est émis par impulsions avec une fréquence d'impulsions qui correspond à une demi-fréquence d'enregistrement d'image de la première et de l'au moins une deuxième caméra (M, H, V), et dans lequel deux images successives capturées par la première et l'au moins une deuxième caméra (M, H, V) sont soustraites respectivement l'une de l'autre, et/ou dans lequel la lumière ambiante est bloquée dans les images de caméra au moyen d'un filtre optique, qui est transparent uniquement dans la plage de longueurs d'onde de la lumière de projection, avec laquelle le motif structurel (16) est projeté.

8. Dispositif d'identification d'éléments structurels (12) d'un motif structurel (16) projeté sur une scène (14) dans des images de caméra, avec un projecteur (36) pour projeter le motif structurel (16) sur la scène (14), avec une première caméra (M) et au moins une deuxième caméra (H ; V) pour capturer le motif structurel (16) projeté sur la scène (14), dans lequel la première caméra (M) et l'au moins une deuxième caméra (H ; V) sont positionnées distantes l'une de l'autre, et dans lequel le projecteur (36) est positionné, en dehors d'une ligne de liaison (26, 28) de la première et d'au moins une deuxième caméra (M, H, V), à distance de la première caméra (M) et d'au moins une deuxième caméra (H, V), avec une unité de mémoire (60), dans laquelle sont déposées des données d'étalonnage, acquises par le biais d'un enregistrement d'images d'étalonnage (76, 78) du motif structurel (16) projeté par le projecteur (36) avec la première et au moins une deuxième caméra (M, H, V), qui comprennent respectivement pour les éléments structurels (12) individuels des combinaisons de premiers paramètres, qui mettent en corrélation l'élément structurel (12) concerné avec la position et l'orientation de la première caméra (M) et du projecteur (36), et au moins de deuxièmes paramètres, qui mettent en corrélation l'élément structurel (12) concerné avec la position et l'orientation de l'au moins une deuxième caméra (H ; V) et du projecteur (36), et avec une unité de calcul (62) qui est conçue pour déterminer, au moyen des données d'étalonnage, par rapport à un élément structurel (12) à identifier dans l'image de caméra de la première caméra (M), l'élément structurel (12) dans l'image de caméra de l'au moins une deuxième caméra (H ; V) qui peut être attribué de manière mutuellement univoque à l'élément structurel (12) à identifier dans l'image de caméra de la première caméra (M), **caractérisé en ce que**, les premiers paramètres déposés dans l'unité de mémoire (60) pour les éléments structurels (12) individuels comportent des pentes (StM) et des points d'intersection (SPM) avec un premier axe de référence (84) de premières droites épipolaires d'exposition relatives à la première caméra (M) et les au moins deuxièmes paramètres pour les éléments structurels (12) individuels comprennent des pentes (StH, StV) et des points d'intersection (SPH, SPV) avec un second axe de référence de droites épipolaires d'exposition relatives à l'au moins une deuxième caméra (H, V), dans lequel les droites épipolaires d'exposition sont situées dans le plan d'image de la caméra concernée, et dans lequel chaque élément structurel reproduit est toujours situé sur les mêmes droites épipolaires d'exposition et son lieu sur cette droite épipolaire d'exposition dépend de la distance de l'élément structurel projeté concerné à la caméra.

9. Dispositif selon la revendication 8, dans lequel l'unité de calcul (62) est conçue pour déterminer des coordonnées de pixel de l'élément structurel (12) à identifier dans l'image de caméra de la première caméra (M), pour calculer à partir des coordonnées de pixel et des données d'étalonnage au moins un premier paramètre, pour sélectionner à partir des données d'étalonnage tous les éléments structurels (12) qui, à l'intérieur d'une bande de tolérance, satisfont également l'au moins un premier paramètre, en outre pour sélectionner pour chacun de ces éléments structurels (12) sélectionnés au moins un des au moins deuxièmes paramètres, et pour déterminer dans l'image de caméra de l'au moins une deuxième caméra (H, V) l'élément structurel (12) qui peut être attribué de manière mutuellement univoque dans l'image de caméra de la première caméra (M) à l'élément structurel (12) à identifier.

10. Dispositif selon la revendication 8 ou 9, dans lequel une pupille d'entrée (18) de la première caméra (M), une pupille d'entrée (20, 22) de l'au moins une deuxième caméra (H, V) et une pupille de sortie (38) du projecteur (36) sont situées dans un plan commun.

11. Dispositif selon l'une quelconque des revendications 8 à 10, dans lequel un axe optique (30) de la première caméra (M), un axe optique (32, 34) de l'au moins une deuxième caméra (H, V) et un axe optique (40) du projecteur (36) sont parallèles entre eux.

12. Dispositif selon l'une quelconque des revendications 8 à 11, en outre avec une troisième caméra (V) pour capturer le motif structurel (16) projeté sur la scène (14), dans lequel la troisième caméra (V) est positionnée en dehors de la ligne de liaison (26) de la première et de la deuxième caméra (M, H) et en dehors de la ligne de liaison (37) de la première caméra (M) et du projecteur (36) et en dehors de la ligne de liaison (39) de la deuxième caméra (H) et du projecteur (36), dans lequel les données d'étalonnage déposées dans l'unité de mémoire (62) comprennent en plus des troisièmes paramètres qui mettent en corrélation l'élément structurel (12) concerné avec la position et l'orientation de la troisième caméra (V) et du projecteur (36).

13. Utilisation d'un procédé selon l'une quelconque des revendications 1 à 7 et/ou d'un dispositif (10) selon l'une quelconque des revendications 8 à 12 pour la surveillance d'une zone de danger d'une machine.

Fig. 1

EP 3 195 256 B1

Fig. 2

Fig. 3

Fig. 4

Fig. 5

Fig. 6

EP 3 195 256 B1

**EP 3 195 256 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2133619 A1
- EP 2019281 A1
- WO 2013145665 A1
- US 20080201101 A1
- DE 202008017729 U1
- DE 102004020419 B3
- US 6466305 B
- EP 2568253 A1